(19)
 Europäisches Patentamt

European Patent Office

Office européen des brevets

(11) **EP 2 461 083 A1**

(12) **EUROPEAN PATENT APPLICATION**
published in accordance with Art. 153(4) EPC

(43) Date of publication:
 **06.06.2012 Bulletin 2012/23**

(51) Int Cl.:
 ***F21S 2/00*** (2006.01)    ***F21V 8/00*** (2006.01)
 ***G02B 6/00*** (2006.01)

(21) Application number: **10804039.5**

(22) Date of filing: **26.05.2010**

(86) International application number:
 **PCT/JP2010/003512**

(87) International publication number:
 **WO 2011/013286 (03.02.2011 Gazette 2011/05)**

(84) Designated Contracting States:
 **AL AT BE BG CH CY CZ DE DK EE ES FI FR GB GR HR HU IE IS IT LI LT LU LV MC MK MT NL NO PL PT RO SE SI SK SM TR**

(30) Priority: **27.07.2009 JP 2009174419**

(71) Applicant: **S.K.G. Co., Ltd.**
 **Aichi 465-0095 (JP)**

(72) Inventors:
 • **SAKAMOTO, Mitsuhide**
 **Ichinomiya-shi**
 **Aichi 491-0825 (JP)**

• **NAKASHIMA, Hiroshi**
 **Ichinomiya-shi**
 **Aichi 491-0825 (JP)**
• **HATANO, Eisuke**
 **Ichinomiya-shi**
 **Aichi 491-0825 (JP)**

(74) Representative: **Polypatent**
 **Sattlerweg 14**
 **51429 Bergisch Gladbach (DE)**

(54) **MANUFACTURING METHOD FOR LIGHT-GUIDING PLATE, LIGHT-GUIDING PLATE, BACKLIGHT DEVICE, LIGHTING DEVICE, AND MANUFACTURING APPARATUS FOR LIGHT-GUIDING PLATE**

(57) This invention has an object to provide a manufacturing method for light guide plate, from small to relatively large sizes, capable of corresponding to an arbitrary shape and the optical characteristics suitable for the shape and reducing the takt time. The invented manufacturing method is **characterized in** having, as the manufacturing method for light guide plate rendering light enter from a side surface of a light guide plate substrate and output from a major surface, the steps of arranging fabrication dots in a matrix shape on a tip surface in a rectangular shape of an ultrasound processing horn; forming, on one major surface of the light guide plate substrate, reflection dots reflecting the fabrication dots on the tip surface by pressing the tip surface of the ultrasound processing horn to the one major surface of the light guide plate substrate; forming the reflection dots in a prescribed range on the one major surface of the light guide plate substrate by correlatively transferring the ultrasound processing horn within the major surface with respect to the light guide plate substrate to repeat formation of the reflection dots; and forming the reflection dots on each major surface of the light guide plate substrate so that the reflection dots are not located at the same position between the opposite major surfaces.

FIG 4

(a)  (b)  (c)  (d)

## Description

### Field of the invention

This invention relates to a manufacturing method for double side light emission in which flexible dot fabrication using a ultrasound processing horn can correspond to manufacturing light guide plates in a small quantity but many kinds from a small size to a relatively large size, to a light guide plate manufactured with the above manufacturing method, to a back light device and an illumination device formed with the light guide plate, and to a manufacturing apparatus for light guide plate in which the light guide plate is manufactured.

### Description of Related Art

In a light guide plate producing an area light source in use of an LED light, a light guide plate's structure has been known in having, e.g., reflection dots whose cross section is in a reversed wedge shape becoming broader as proceeding in a light flux's proceeding direction emitted from a light source, for a light guide plate used upon incorporated in a television set with a large monitor screen (see, e.g., Patent Document #1).

A light guide plate has been known in which a dot pattern is formed on a surface of a resin by melting the resin in use of a heated roller method or the like and by solidifying the resin in a prescribed shape. With such a light guide plate, if the dot pattern is formed uniformly on the surface of the light guide plate, it is possible to obtain uniformly emitting diffused light not having any unevenness on the surface of the light guide plate when LED light or the like is entered from an end surface of the light guide plate (see, e.g., Patent Document #2).

### Prior Art Documents

### Patent Documents

Patent Document #1: Japanese Application Publication No. 2008-305713
Patent Document #2: Japanese Application Publication No. 2006-511128

### Summary of the Invention

### Problems to be solved by the Invention

With the structure described above, however, it is not easy to correspond to an arbitrary shape in productions of a small quantity and many kinds and to the optical characteristics suitable for the shape, and there raises a problem that it take a takt time for manufacture. There also raises a problem that plural uniform recess pattern scars cannot be formed on the surface of the light guide plate.

It is therefore an object of the invention, in consideration of the above technical problems, to provide, for a light guide plate to be used for sign plates and advertisement boards from a small size to a relatively large size, a manufacturing method for light guide plate capable of corresponding to an arbitrary shape in productions of a small quantity and many kinds and to the optical characteristics suitable for the shape and capable of reducing largely the takt time for manufacture, to provide a light guide plate manufactured by the above manufacturing method, a back light device and an illumination device, which are formed with the above light guide plate, and to provide a manufacturing apparatus for light guide plate manufacturing the above light guide plate formed with plural uniform recess pattern scars on the surface of the light guide plate.

### Means for solving the problems

To solve the above described problems, the manufacturing method for light guide plate according to the invention has a feature in which, for the manufacturing method for light guide plate rendering light enter from a side surface of a light guide plate substrate and output from a major surface, the manufacturing method comprises the steps of: arranging fabrication dots in a matrix shape on a tip surface in a rectangular shape of an ultrasound processing horn; forming, on one major surface of the light guide plate substrate, reflection dots reflecting the fabrication dots on the tip surface by pressing the tip surface of the ultrasound processing horn to the one major surface of the light guide plate substrate; forming the reflection dots in a prescribed range on the one major surface of the light guide plate substrate by correlatively transferring the ultrasound processing horn within the major surface with respect to the light guide plate substrate to repeat formation of the reflection dots; and forming the reflection dots on each major surface of the light guide plate substrate so that the reflection dots are not located at the same position between the opposite major surfaces.

**Advantages of the Invention**

According to the manufacturing method for light guide plate according to the invention, for a light guide plate to be used for sign plates and advertisement boards from a small size to a relatively large size, the method is capable of corresponding to an arbitrary shape in productions of a small quantity and many kinds and to the optical characteristics suitable for the shape and capable of largely reducing the takt time for manufacture.

**Brief Description of the Drawings**

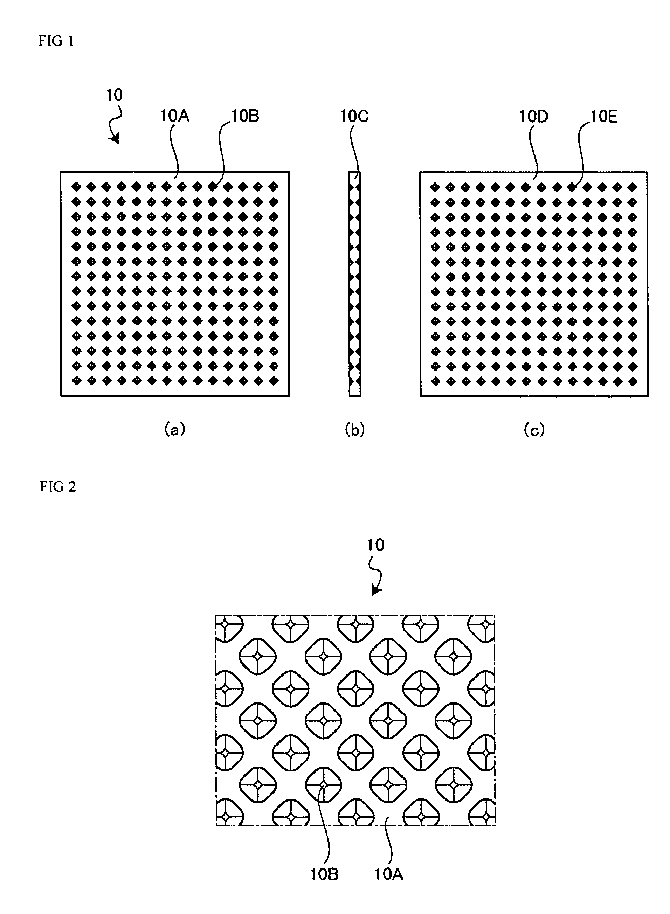

Figs. 1 are schematic views showing a light guide plate according to the first embodiment of the invention; (a) is a schematic view showing a front surface portion of the light guide plate; (b) is a schematic view showing a side surface portion of the light guide plate; (c) is a schematic view showing a back surface portion of the light guide plate.
Fig. 2 is a schematic view showing a part of the front surface portion of the light guide plate according to the first embodiment of the invention.

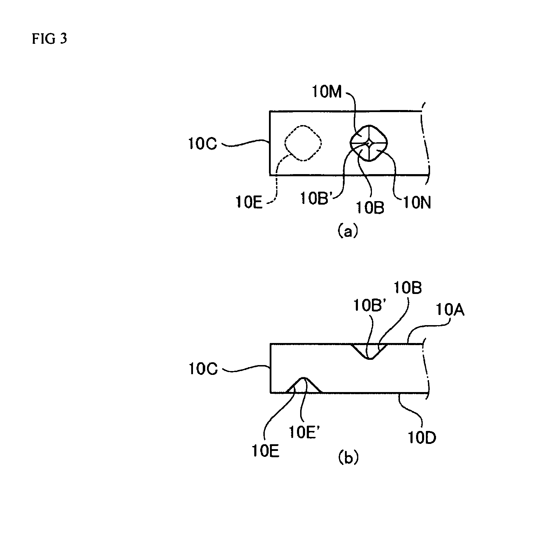

Figs. 3 are schematic views showing recess pattern scars made of pyramids formed on the light guide plate according to the first embodiment of the invention; (a) is a schematic view showing recess pattern scars from a major surface of the light guide plate; (b) is a schematic view showing recess pattern scars from a side surface of the light guide plate.

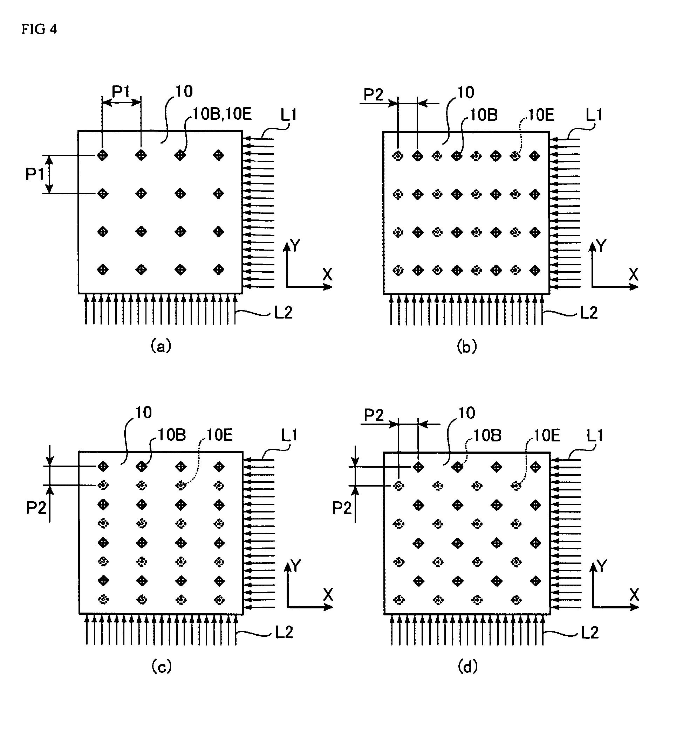

Figs. 4 are schematic views showing, in a transparent state, front surface portion recess pattern scars formed on a front surface portion and back surface portion recess pattern scars formed on a back surface portion of the light guide plate according to the first embodiment of the invention; (a) is a schematic view showing a state that the back surface portion recess pattern scars are formed at the same position between surfaces with respect to the front surface portion recess pattern scars; (b) is a schematic view showing a state that the back surface portion recess pattern scars are formed at a position shifted by a half pitch in an X direction with respect to the front surface portion recess pattern scars; (c) is a schematic view showing a state that the back surface portion recess pattern scars are formed at a position shifted by a half pitch in a Y direction with respect to the front surface portion recess pattern scars; (d) is a schematic view showing a state that the back surface portion recess pattern scars are formed at a position shifted by a half pitch in both of the X, Y directions with respect to the front surface portion recess pattern scars.

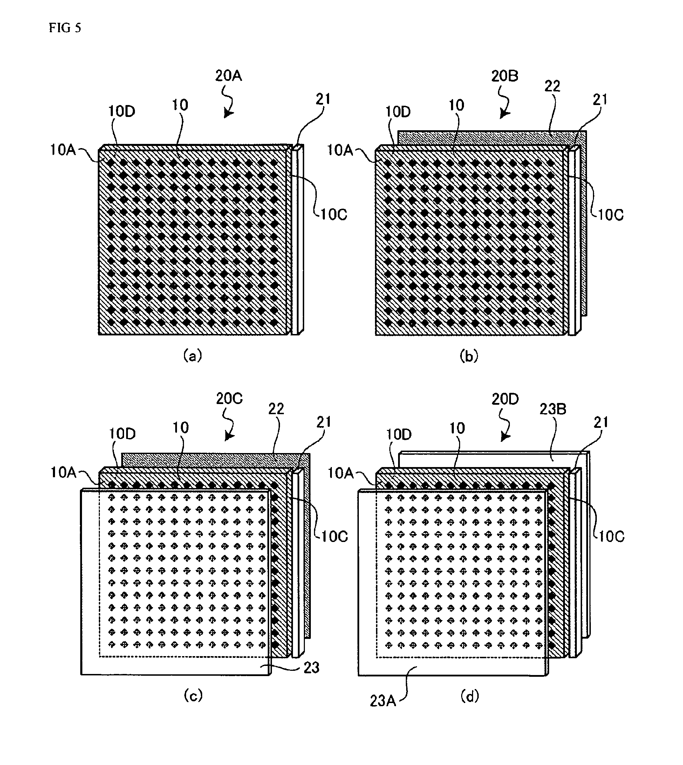

Figs. 5 are perspective views showing a back light device using the light guide plate according to the first embodiment of the invention in an exploded state to respective structural members; (a) is a perspective view showing the back light device in a case that no diffusing plate and no reflection sheet is provided on either surface of the light guide plate; (b) is a perspective view showing the back light device in a case that a reflection sheet is provided on only one surface of the light guide plate; (c) is a perspective view showing the back light device in a case that a diffusing plate is provided on only one surface of the light guide plate and that a reflection sheet is provided on the other surface of the light guide plate; (d) is a perspective view showing the back light device in a case that a diffusing plate is provided on each surface of the light guide plate.

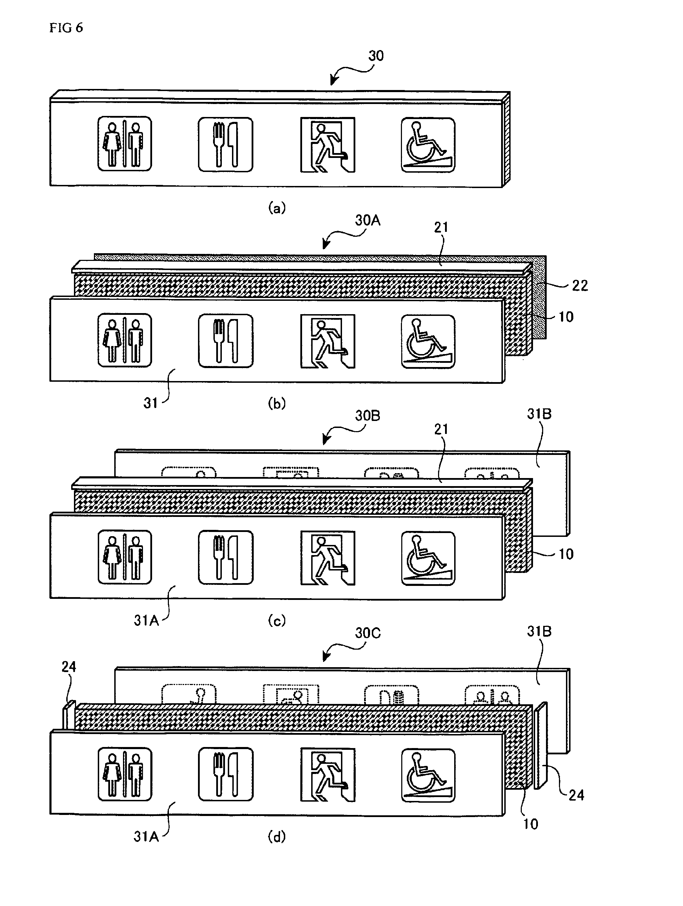

Figs. 6 are perspective views showing a sign light for the back light device using the light guide plate according to the first embodiment of the invention; (a) is a perspective view showing, in an assembled state, the sign light arranged with the light guide plate; (b) is a perspective view showing a state of a light guide plate arranged with a sign display plate on one surface and with a reflection sheet on the other surface; (c) is a perspective view showing a state of a light guide plate arranged with a sign display plate on each surface; (d) is a perspective view showing a sign display plate at which an LED unit is arranged on each end of the light guide plate.

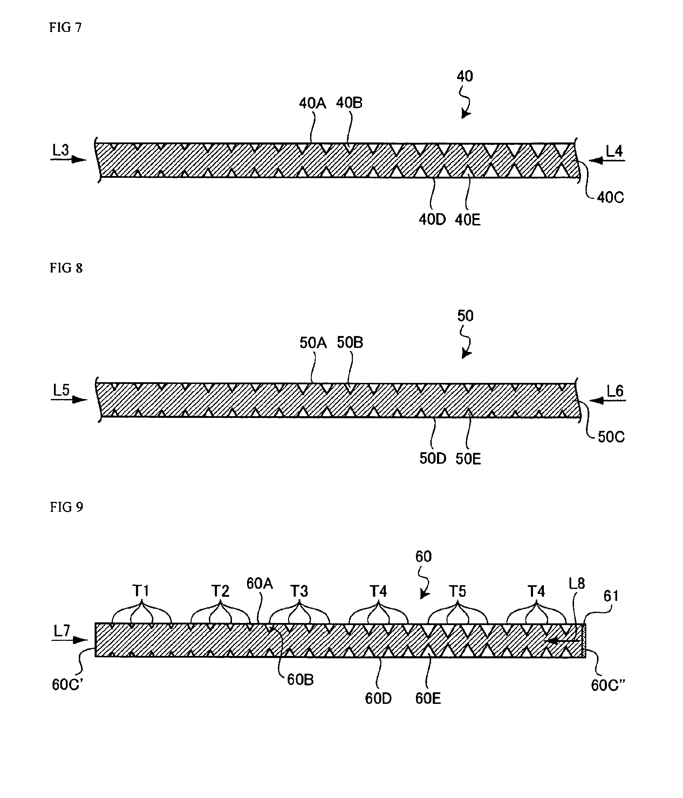

Fig. 7 is a schematic view showing a side surface portion of a light guide plate having different depths of front surface portion recess pattern scars and back surface portion recess pattern scars according to the second embodiment of the invention.
Fig. 8 is a schematic view showing a side surface portion of a light guide plate having different depths of front surface portion recess pattern scars and back surface portion recess pattern scars according to the second embodiment of the invention.
Fig. 9 is a schematic view showing a side surface portion of a light guide plate having different depths of front surface portion recess pattern scars and back surface portion recess pattern scars and a reflection tape adhered to the light guide plate according to the third embodiment of the invention.

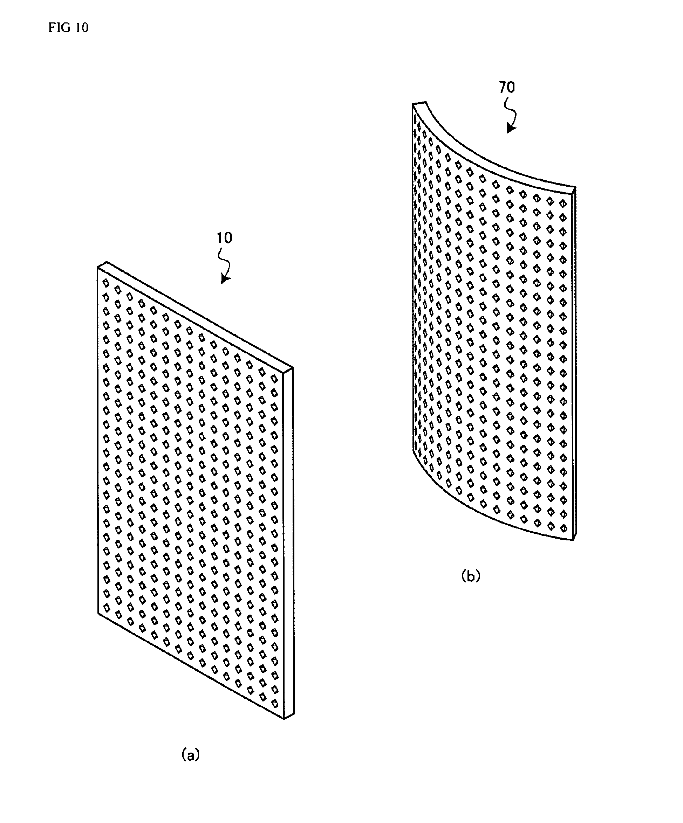

Figs. 10 are schematic views showing a manufacture of a light guide plate according to the fourth embodiment of the invention; (a) is a perspective view showing a light guide plate before fabrication for curving; (b) is a perspective view showing a light guide plate after fabrication for curving.

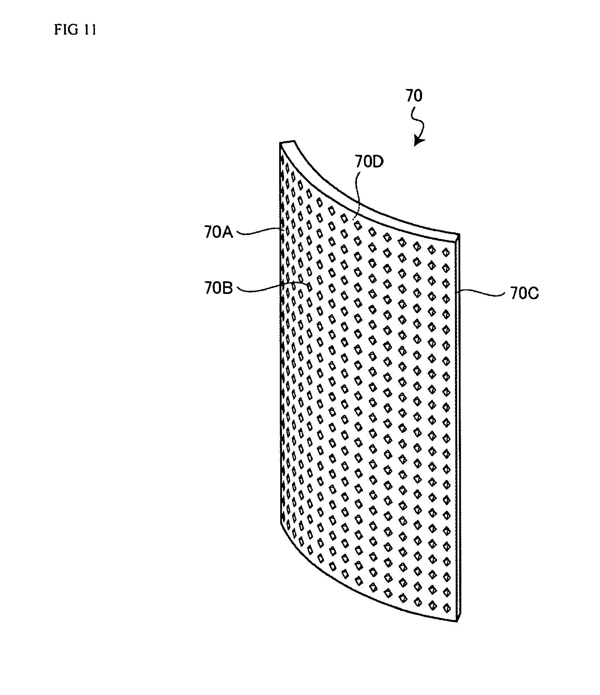

Fig. 11 is a perspective view showing a light guide plate according to the fourth embodiment of the invention.

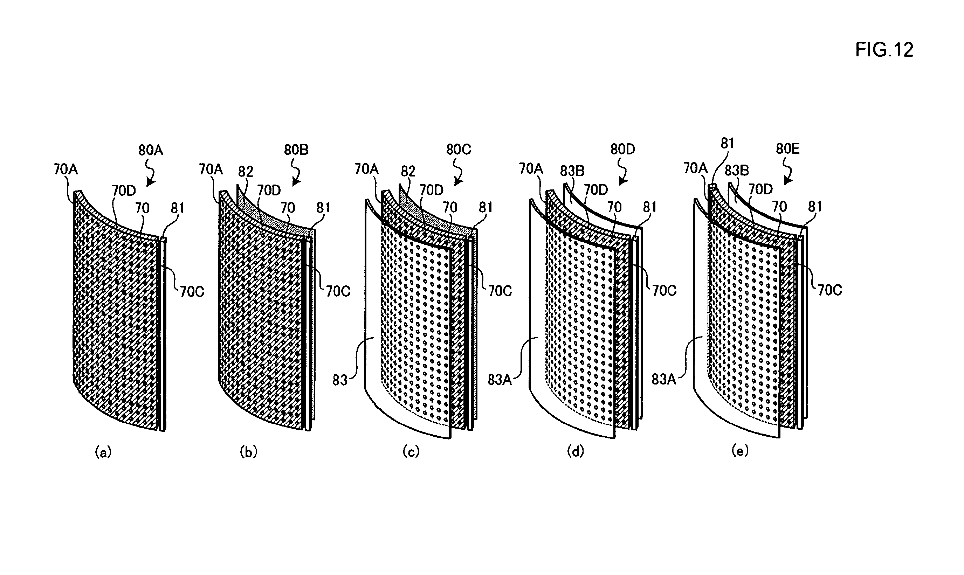

Figs. 12 are perspective views showing a back light device using the light guide plate according to the fourth embodiment of the invention in an exploded state to respective structural members; (a) is a perspective view showing the back light device in a case that no diffusing plate and no reflection sheet is provided on either surface of the light guide plate; (b) is a perspective view showing the back light device in a case that a reflection sheet is provided on only one surface of the light guide plate; (c) is a perspective view showing the back light device in a case that a diffusing plate is provided on only one surface of the light guide plate and that a reflection sheet is provided on the other surface of the light guide plate; (d) is a perspective view showing the back light device in a case that a diffusing plate and a reflection sheet are provided on each surface of the light guide plate; (e) is a perspective view showing the back light device at which an LED unit is arranged on each end of the light guide plate.

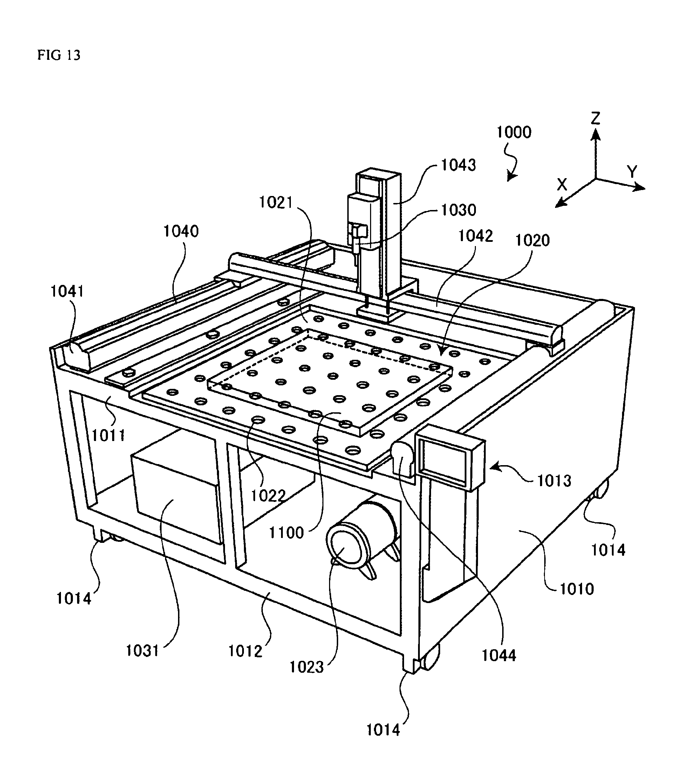

Fig. 13 is a perspective view showing a manufacturing apparatus for light guide plate for manufacturing the light guide plate according to the first through fourth embodiment of the invention.

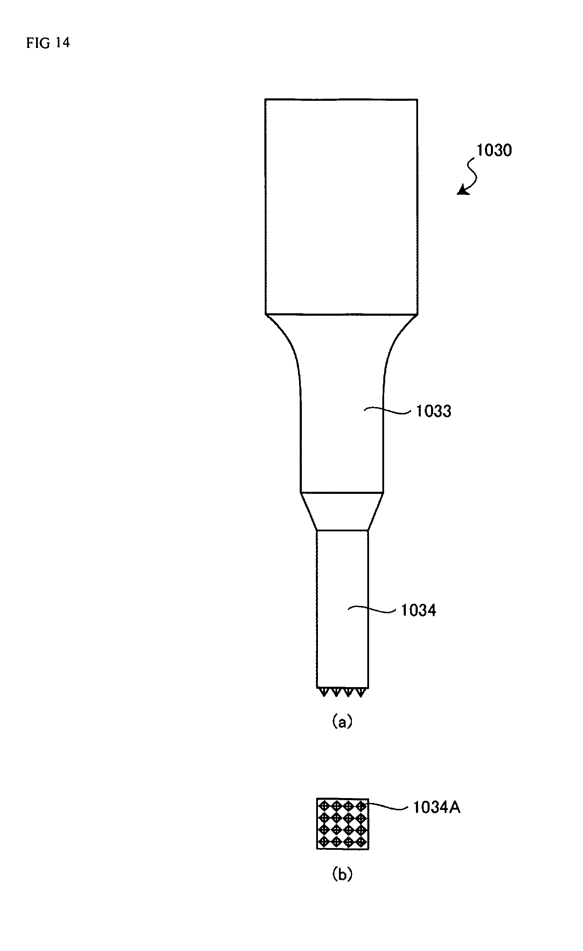

Figs. 14 are schematic views showing an ultrasound processing portion of the manufacturing apparatus for light guide plate for forming recess pattern scars on the light guide plate according to the first through fourth embodiment of the invention; (a) is a schematic view showing a side surface of the ultrasonic processing portion; (b) is a schematic view showing a tip of the ultrasonic processing portion.

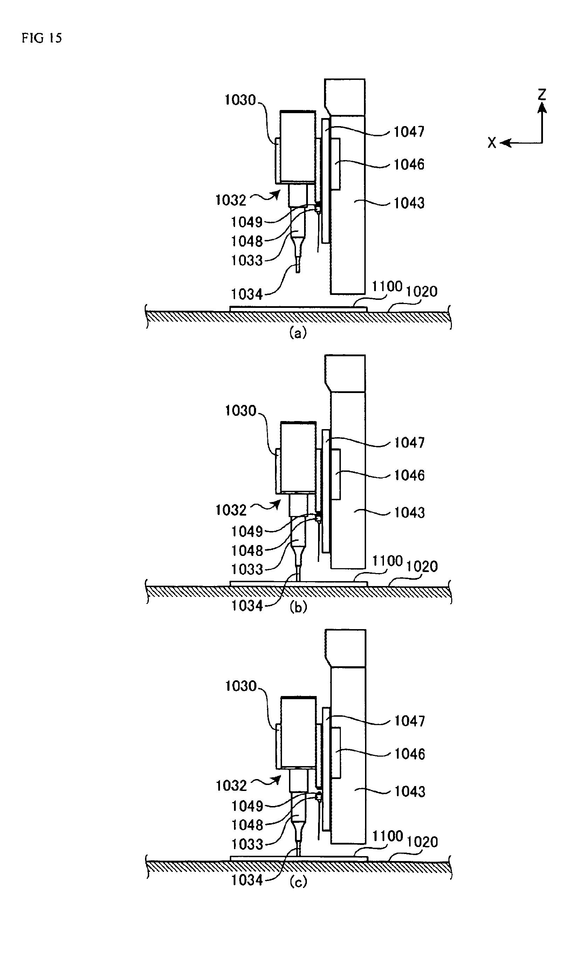

Figs. 15 are schematic views showing detection of a processing start height of a light guide plate substrate in regard with an X-axis direction of an ultrasound processing portion in the manufacturing apparatus for light guide plate for manufacturing the light guide plate according to the first through fourth embodiment of the invention; (a) is a schematic view showing a state prior to the beginning of detection operation of the processing start height of the light guide plate substrate; (b) is a schematic view showing a state during the detection operation of the processing start height of the light guide plate substrate; (c) is a schematic view showing a state of the completion of the detection operation of the processing start height of the light guide plate substrate.

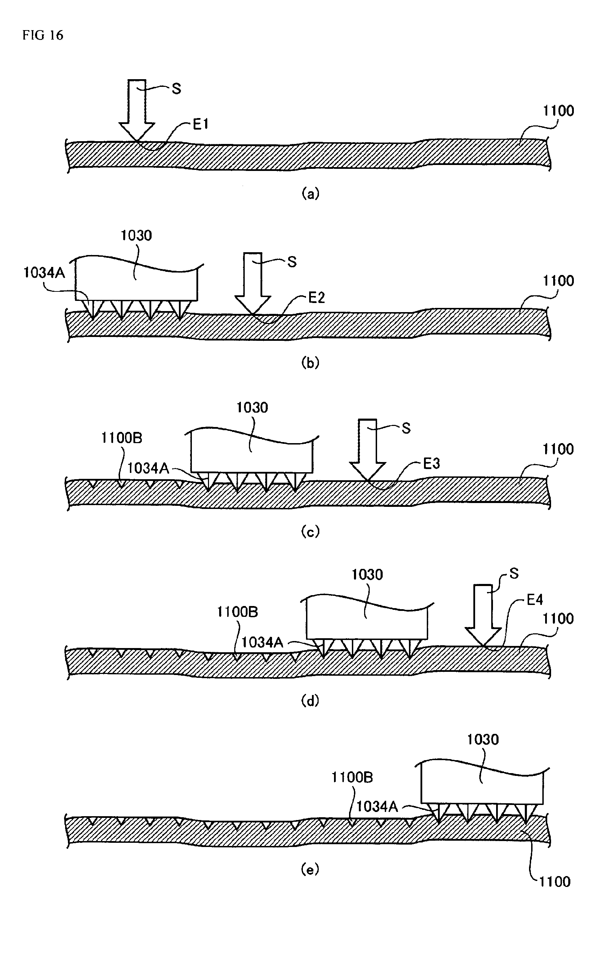

Figs. 16 are schematic views showing a state of the embossing process for forming recess pattern scars formed on the light guide plate according to the first through fourth embodiments of the invention; (a) through (e) are schematic views sequentially showing states of measuring the processing start reference height of a light guide plate prior to the embossing process and then performing the embossing process to the light guide plate in compliance with the processing start reference height.

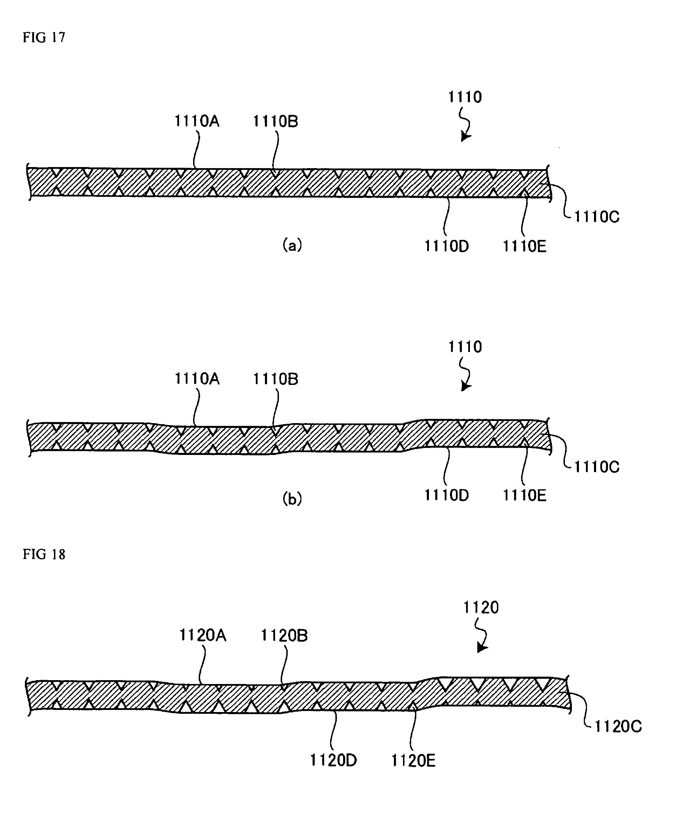

Figs. 17 are schematic views showing a side surface portion of the light guide plate according to the first through fourth embodiments of the invention; (a) is a schematic view showing the side surface portion of the light guide plate in a case where the light guide plate has no curving or deviation in thickness; (b) is a schematic showing the side surface portion of the light guide plate in a case where the light guide plate has some curving or deviation in thickness.

Fig. 18 is a schematic view showing the side surface portion of the light guide plate in a case where the light guide plate has some curving or deviation in thickness in a conventional manufacture of a light guide plate.

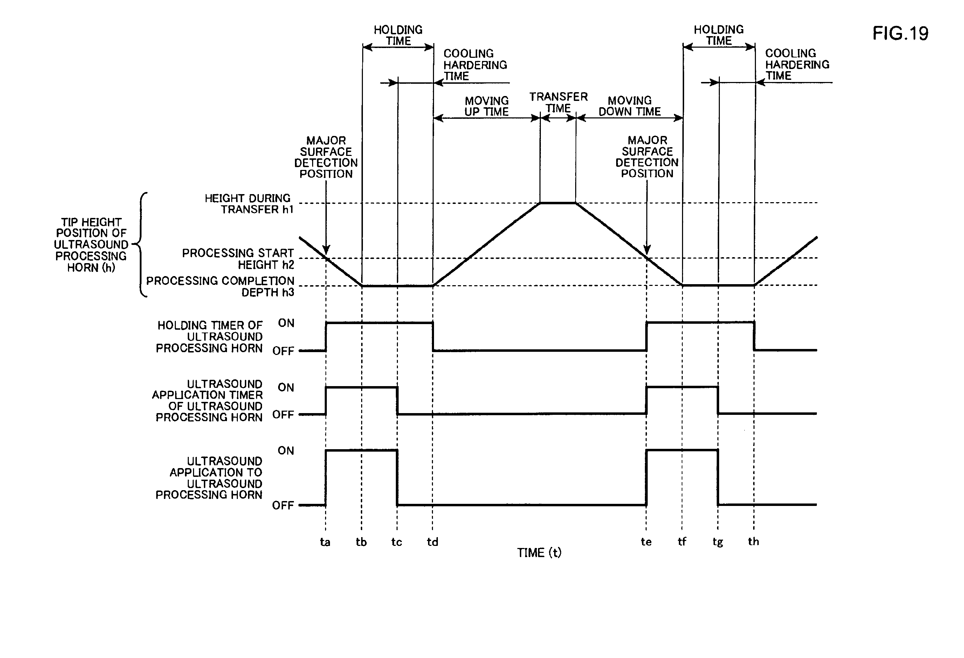

Fig. 19 is a schematic view showing a time chart regarding timings of the ultrasound applied to the ultrasound processing horn in association with pushing down and holding of the position of the ultrasound processing horn for the light guide plate substrate in the manufacturing apparatus for light guide plate for manufacturing the light guide plate according to the first through fourth embodiment of the invention.

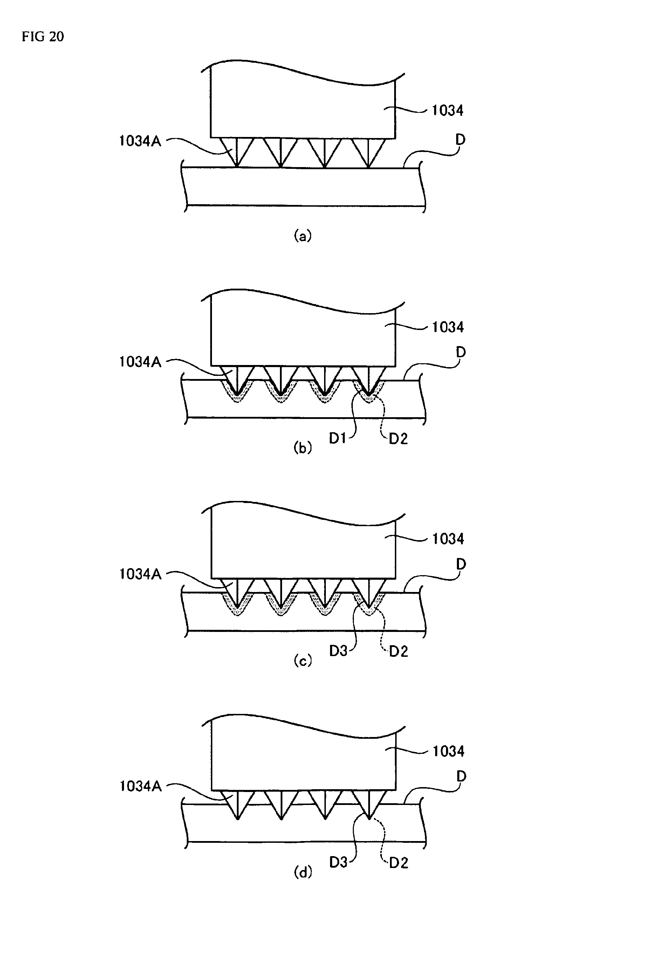

Fig. 20 is a schematic view showing a fabrication to a light guide plate substrate using the ultrasound processing horn in the manufacturing method for light guide plate according to the first through fourth embodiment of the invention.

## Embodiments to Employ the Invention

Hereinafter, referring to the drawings, described are preferred embodiments regarding a light guide plate, a back light device, an illumination device, a manufacturing apparatus for light guide plate, and a manufacturing method for light guide plate according to the invention. It is to be noted that the light guide plate, the back light device, the illumination device, the manufacturing apparatus for light guide plate, and the manufacturing method for light guide plate according to the invention are not limited to the descriptions below but can be modified as far as not deviated from the summary of the invention.

In the following descriptions, first, referring to Fig. 1 through Fig. 6, the light guide plates, the back light device, and the illumination device according to the first embodiment of the invention are described. Next, referring to Fig. 7 and Fig. 8, the light guide plates formed at the back light device or the illumination device according to the second embodiment of the invention are described. Referring to Fig. 9, subsequently, the light guide plates formed at the back light device or the illumination device according to the third embodiment of the invention are described. Referring to Fig. 10 through Fig. 12, the light guide plate and the back light device according to the fourth embodiment of the invention are described. Finally, referring to Fig. 13 through Fig. 20, the manufacturing apparatus for light guide plate in the first through fourth embodiments and the manufacturing method for light guide plate using the manufacturing apparatus for light guide plate are described.

First Embodiment

Hereinafter, referring to Fig. 1 through Fig. 6, the light guide plate 10, the back light device, and the illumination device according to the first embodiment of the invention are described specifically.

First, referring to Fig. 1 and Fig. 2, a structure of the light guide plate 10 manufactured by a manufacturing method for the light guide plate 10 according the invention is described. Figs. 1 are schematic views showing the light guide plate 10; Fig. 1(a) is the schematic view showing a front surface portion 10A of the light guide plate 10; Fig. 1(b) is the schematic view showing a side surface portion 10C of the light guide plate 10; and Fig. 1(c) is the schematic view showing a back surface portion 10D of the light guide plate 10. Fig. 2 is a schematic view showing a part of the front surface portion 10A of the light guide plate 10 in an enlarged manner.

The light guide plate 10 is structured of a plate shaped portion made of. e. g. a polymethyl methacrylate resin plate formed in a prescribed size with plural recess pattern scars. More specifically, the size of the plate shaped portion is in a rectangular shape of 100 mm x 100 mm through 1450 mm x 1030 mm equivalent to B0 size (JIS standard) and corresponds to a thickness of 2 mm through 12 mm. As shown in Fig. 1, front surface portion recess pattern scars 10B are formed on the front surface portion 10A of the light guide plate 10 whereas back surface portion recess pattern scars 10E are formed on the back surface portion 10D of the light guide plate 10. The recess pattern scars are respectively formed in a pyramid shape scar having, e.g., a long diameter of 0.6 mm and a depth of 0.4 mm and are formed with a pitch of, e.g., 1.2, 1.5, 2.0, and 8.0 as for a pitch pattern in a matrix shaped molding scar.

Next, recess pattern scars made of pyramids formed in the light guide plate 10 are described specifically in reference to Fig. 3. Figs. 3 are schematic views showing the recess pattern scars made of pyramids formed in the light guide plate 10; Fig. 3(a) is the schematic view showing the recess pattern scars viewing from the front surface portion 10A of the light guide plate 10; Fig. 3(b) is the schematic view showing the recess pattern scars viewing from the side surface portion 10C of the light guide plate 10.

In the light guide plate 10, diffused light can be outputted effectively from the front surface portion 10A and the back surface portion 10D by rendering the recess pattern made of the pyramids possess a rectangular face at the lowest portion. More specifically, a part of light entered from the side surface portion 10C is radiated to, e.g., the lowest portion 10B' of the front surface portion recess pattern scars 10B formed at the front surface portion 10A, and is reflected toward the back surface portion 10D in a direction away from the side surface portion 10C. Similarly, a part of the light entered from the side surface portion 10C is radiated to, e.g., the lowest portion 10E' of the back surface portion recess pattern scars 10E formed on a side of the back surface portion 10D , and is reflected toward the front surface portion 10A in a direction away from the side surface portion 10C. Accordingly, the light entered from the side surface portion 10C can be effectively converted to the diffused light and be outputted from the front surface portion 10A and the back surface portion 10D.

In regard to the detail of the recess pattern formed at the light guide plate, the diffused light can be directly outputted effectively from the front surface portion 10A and the back surface portion 10D by rendering the recess pattern made of the pyramids possess a rectangular face at the lowest portion. More specifically, if the recess pattern is made in a pure pyramid shape, the diffused light generated near the lowest portion of the pyramid is largely attenuated by multiple reflections near the lowest portion because a distance from one surface 10M to the other surface ION opposing thereto at the tip portion is very short, and cannot be directly outputted from the front surface portion 10A and the back surface portion 10D. To the contrary, in a case that the recess pattern has a face made in a rectangular shape at the lowest portion of the pyramid, the diffused light generated near the lowest portion of the pyramid can be directly outputted from the front surface portion 10A and the back surface portion 10D prior to multiple reflection, because there is a certain distance between the one surface 10M and the other surface ION opposing thereto near the lowest portion. Therefore, the incident light from the side surface portion 10C can be effectively outputted from the major surfaces.

Optical specifications of the light guide plate 10 manufactured by the manufacturing method for the light guide plate 10 are described next. More specifically, the Optical specification regarding the recess pattern scars formed on double sides of the light guide plate 10 is described specifically in reference to Fig. 4.

Figs. 4 are schematic views showing the front surface portion recess pattern scars 10B formed at the front surface portion l0A of the light guide plate with a pitch P1 and the back surface portion recess pattern scars 10E formed at the back surface portion 10D with the pitch P1 in a transparent state; Fig. 4(a) shows a state that the back surface portion recess pattern scars 10E are formed at the same position between surfaces with respect to the front surface portion recess pattern scars 10B; Fig. 4(b) shows a state that the back surface portion recess pattern scars 10E are formed at a position shifted by a half pitch P2 in an X direction with respect to the front surface portion recess pattern scars 10B; Fig. 4 (c) shows a state that the back surface portion recess pattern scars 10E are formed at a position shifted by the half pitch P2 in a Y direction with respect to the front surface portion recess pattern scars 10B; Fig. 4 (d) shows a state that the back surface portion recess pattern scars 10E are formed at a position shifted by the half pitch P2 in both of the X, Y directions with respect to the front surface portion recess pattern scars 10B.

LED light is respectively radiated to the front surface portion recess pattern scars 108 formed at the front surface portion 10A of the light guide plate and to the back surface portion recess pattern scars 10E formed at the back surface portion 10D. More specifically, in each of Fig. 4(a) through Fig. 4(d), incident light L1 of the LED light is radiated in the horizontal direction X in Fig. 4 to the recess pattern scars. Similarly, in each of Fig. 4(a) through Fig. 4(d), incident light L2 of the LED light is radiated in the vertical direction Y in Fig. 4 to the recess pattern scars. Hereinafter, in regard with optical characteristics for the specification of the recess pattern scars, optical characteristics under three conditions in which the back surface portion recess pattern scars 10E are formed at a position shifted by the half pitch P2 with respect to the front surface portion recess pattern scars 10B shown in Fig. 4(a) through Fig. 4(d) where the state that the back surface portion recess pattern scars 10E are formed at the same position between surfaces with respect to the front surface portion recess pattern scars 10B is set as a standard condition.

First, the optical characteristics under the condition that the back surface portion recess pattern scars 10E are formed at a position shifted by the half pitch P2 in the X direction with respect to the front surface portion recess pattern scars 10B as shown in Fig. 4(b) are described in comparison with Fig. 4(a). With this condition, the density recognizable by viewing the recess pattern scars formed on the light guide plate 10 in the X direction viewable from a side of the front surface portion 10A of the light guide plate 10 becomes twice in comparing the case in Fig. 4(a). Therefore, because bright points made from the recess pattern scars viewable from the side of the front surface portion 10A of the light guide plate 10 become twice in the X direction in comparing the case in Fig. 4(a), differences between brightness and darkness of the light come to be smaller. The density recognizable by viewing the recess pattern scars formed on the light guide plate 10 in the Y direction viewable from a side of the front surface portion 10A of the light guide plate 10 is the same as that in the case in Fig. 4(a). Therefore, in comparison with the case in Fig. 4(a), differences between brightness and darkness of the light in the Y direction are the same.

The optical characteristics under the condition that the back surface portion recess pattern scars 10E are formed at a position shifted by the half pitch P2 in the Y direction with respect to the front surface portion recess pattern scars 10B as shown in Fig. 4(c) are described in comparison with Fig. 4(a). With this condition, the density of the recess pattern scars formed on the light guide plate 10 in the Y direction viewable from a side of the front surface portion 10A of the light guide plate 10 becomes twice in comparing the case in Fig. 4(a). Therefore, because diffused light due to the recess pattern scars viewable from the side of the front surface portion 10A of the light guide plate 10 become twice in the Y direction in comparing the case in Fig. 4(a), differences between brightness and darkness of the light come to be smaller. The density of the recess pattern scars formed on the light guide plate 10 in the X direction viewable from a side of the front surface portion 10A of the light guide plate 10 is the same as that in the case in Fig. 4(a). Therefore, in comparison with the case in Fig. 4(a), differences between brightness and darkness of the light in the X direction are the same.

The optical characteristics under the condition that the back surface portion recess pattern scars 10E are formed at a position shifted by the half pitch P2 in both of the X, Y directions with respect to the front surface portion recess pattern scars 10B as shown in Fig. 4(d) are described in comparison with Fig. 4(a). With this condition, the density of the recess pattern scars formed on the light guide plate 10 in the X, Y directions viewable from a side of the front surface portion 10A of the light guide plate 10 becomes twice respectively in comparing the case in Fig. 4(a). Therefore, because diffused light due to the recess pattern scars viewable from the side of the front surface portion 10A of the light guide plate 10 become twice in both of the X, Y directions in comparing the case in Fig. 4(a), differences between brightness and darkness of the light come to be smaller.

As described in referring to Fig. 4(a) through 4(d), the optical characteristics can be selected arbitrarily by forming the position of the back surface portion recess pattern scars 10E to be shafted in the X, Y directions with respect to the front surface portion recess pattern scars 10B. Under the condition shown in Fig. 4(d), the differences between brightness and darkness of the light become smaller in both of the X, Y directions, in comparing the case in Fig. 4(a), so that good optical characteristics can be obtained.

Next, referring to Fig. 5(a) through Fig. 5(d), a structural example of a back light device 20 arranged with the light guide plate 10 according to this embodiment is described specifically.

Figs. 5 are perspective views showing the back light device 20 using the light guide plate 10 according to this embodiment in an exploded state to respective structural members; Fig. 5(a) is the perspective view showing the back light device 20A in a case that no diffusing plate 23 and no reflection sheet 22 is provided on either surface of the light guide plate 10; Fig. 5(b) is the perspective view showing the back light device 20B in a case that the reflection sheet 22 is provided on only one surface of the light guide plate 10; Fig. 5(c) is the perspective view showing the back light device 20C in a case that the diffusing plate 23 is provided on only one surface of the light guide plate 10 and that the reflection sheet 23 is provided on the other surface of the light guide plate 10; Fig. 5(d) is the perspective view showing the back light device 20D in a case that the diffusing plate 23A and the diffusing plate 23B are provided respectively on double surfaces of the light guide plate 10. Hereinafter, the respective back light devices 20 shown in Fig. 5(a) through Fig. 5 (d) are described sequentially.

First, with the back light device 20A shown in Fig. 5(a), an LED unit 21 constituted of white LEDs more than one piece is provided as to face to the side surface portion 10C of the light guide plate 10. Where white LED light is entered into the light guide plate 10 by application of drive currents to the white LEDs, the white LED light is radiated to the recess pattern scars formed at the front surface portion 10A and the back surface portion 10D of the light guide plate 10, thereby generating the diffused light respectively. The diffused light is further made outgoing to the front surface portion 10A and the back surface portion 10D.

With the back light device 20B shown in Fig. 5(b), the reflection sheet 22 is provided as to face to the back surface portion 10D of the light guide plate 10 formed at the back light device 20A. In the back light device 20B, the diffused light discharged from a side of the back surface portion 10D is reflected on the reflection sheet 22, and after entering into the light guide plate 10, the incident light is outputted from a side of the front surface portion 10A.

With the back light device 20C shown in Fig. 5(c), the diffusing plate 23 is provided as to face to the front surface portion 10A of the light guide plate 10 formed at the back light device 20B. In the back light device 20C, the diffused light discharged from the front surface portion 10A is entered into the diffusing plate 23, and the diffused light is further diffused at the diffusing plate 23. Consequently, the bright points located in a dispersing manner become obscure, thereby rending the diffusing plate 23 become a uniformly light emitting surface. A semi-transparent white plate, for example, may be used for the diffusing plate 23.

With the back light device 20D shown in Fig. 5(d), the diffusing plate 23A and the diffusing plate 23B are provided respectively as to face to the front surface portion 10A and the back surface portion 10D of the light guide plate 10 formed at the back light device 20B. In the back light device 20D, the diffused light discharged from the front surface portion 10A is entered into the diffusing plate 23A provided as to face to the front surface portion 10A, and the diffused light is further diffused at the diffusing plate 23A. In substantially the same way, the diffused light discharged from the back surface portion 10D is entered into the diffusing plate 23B provided as to face to the back surface portion 10D, and the diffused light is further diffused at the diffusing plate 23B. Consequently, the bright points located in a dispersing manner become obscure, thereby rending the diffusing plate 23A and the diffusing plate 23B commonly become uniformly light emitting surfaces.

Next, a sign light 30 serving as an example of an illumination device having a back light device arranged with the light guide plate 10 according to this embodiment is described specifically in referring to Fig. 6(a) through 6(d).

Figs. 6 are perspective views showing the sign light 30 for the back light device using the light guide plate 10; Fig. 6(a) is a perspective view showing, in an assembled state, the sign light 30 arranged with the light guide plate 10; Fig. 6(b) is a perspective view showing a state of a light guide plate 10 arranged with a sign display plate 31 on one surface and with a reflection sheet 22 on the other surface; Fig.6 (c) is a perspective view showing a state of a light guide plate 10 arranged with a sign display plate 31 A and a sign display plate 31 B on both surfaces, respectively; Fig. 6(d) is a perspective view showing a sign display plate 31C at which an LED unit 24 is arranged on each end of the light guide plate 10 using the sign display plate 31 B shown in Fig. 6(c). Hereinafter, the sign lights 30 in association with the respective back light devices shown in Fig. 6(a) through Fig. 6(d) are described subsequently.

The sign light 30 is made of, e.g., the light guide plate 10, the LED unit 21, and the sign display plate 31 as shown in Fig. 6(a). With the sign light 30A shown in Fig. 6(b), the LED unit 21 is disposed as to face to the side surface portion 10C of the light guide plate 10. The reflection sheet 22 is disposed as to face to the back surface portion 10D of the light guide plate 10. The sign display plate 31 is disposed as to face to the front surface portion 10A of the light guide plate 10. The sign display plate 31 uses, e.g., a semi-transparent white plate having a surface adhered with a sheet printing a sign for standard guidance or the like. Such the sign light 30A can be a display device emitting light on a single side, and is equivalent to an application product in association with the back light device 20C as shown in Fig. 5(c).

Similarly, with a sign light 30B shown in Fig. 6(c), the LED unit 21 is disposed as to face to the side surface portion 10c of the light guide plate 10. The sign display plate 31 A and the sign display plate 31 B are disposed respectively as to face to the front surface portion 10A and the back surface portion 10D of the light guide plate 10. The sign display plate 31 A and the sign display plate 31 B use respectively, e.g., a semi-transparent white plate having a surface adhered with a sheet printing a sign for standard guidance or the like. Such the sign light 30B can be a display device emitting light on double sides, and is equivalent to an application product in association with the back light device 20D as shown in Fig. 5(d). A sign display plate 31C shown in Fig. 6(d) prevents a center of the light guide plate 10 from darkening in comparison with both ends thereof by arranging the LED units on right and left sides of the light guide plate 10 in a rectangular shape extending in a horizontal direction.

According to the light guide plate 10 of the first embodiment, with the manufacturing method for light guide plate using a manufacturing apparatus for light guide plate 1000 as described below, plural reflection dots reflecting fabrication dots extending in a matrix shape can be formed at one time on one major surface of the light guide plate 1100 by pressing a ultrasound processing portion 1030 formed with the fabrication dots extending in the matrix shape to one major surface of the light guide plate 1100. The ultrasound processing portion 1030 thus formed with the fabrication dots extending in the matrix shape can correspond to flexible dot fabrications using an ultrasound multi-horn for manufacture of the light guide plate from a small size to a relatively large size in a small quality but many kinds, thereby largely reducing the takt time for manufacture. More specifically, according to the ultrasound processing portion 1030 formed with the fabrication dots extending in the matrix shape of four rows and four columns, the takt time for manufacturing the light guide plate 10 is reduced to one sixteenth (1/16) in comparison with the case of a ultrasound processing portion 1030 having a single fabrication dot.

According to the light guide plate 10 of the first embodiment, optical characteristics regarding differences between brightness and darkness of the light can be arbitrarily chosen by forming the position of the back surface portion recess pattern scars 10E shifted in the X, Y directions with respect to the front surface portion recess pattern scars 10B. For example, by forming the position of the back surface portion recess pattern scars 10E shifted by the half pitch P2 in the X, Y directions with respect to the front surface portion recess pattern scars 10B, the differences between brightness and darkness of the light can be reduced in both of the X, Y directions.

Similarly, with the back light device according to the first embodiment, a display device emitting light on a single side or double sides such as, e.g., the sign light 30 can be structured based on required and prescribed optical characteristics in use of the light guide plate 10.


Second Embodiment

Hereinafter, a light guide plate 40 and a light guide plate 50 formed at the back light device and an illumination device according to the second embodiment of the invention are specifically described in referring to Fig. 7 and Fig. 8. Fig. 7 is a schematic view showing a side surface portion 40C of a light guide plate 40 having different depths of front surface portion recess pattern scars 40B and back surface portion recess pattern scars 40E. Similarly, Fig. 8 is a schematic view showing a side surface portion 50C of a light guide plate 50 having different depths of front surface portion recess pattern scars 50B and back surface portion recess pattern scars 50E.

It is to be noted that the light guide plate 40 and the light guide plate 50 according to the second embodiment are **characterized in that** the depths of the recess pattern scars at the front surface portion and the back surface portion are made different in a stepwise manner as different from the front surface portion recess pattern scars 10B and the back surface portion recess pattern scars 10E formed on the light guide plate 10 with substantially a uniform depth thereof. The structures of the light guide plate 40 and the light guide plate 50 other than those are substantially the same as the structures of the light guide plate 10 described in the first embodiment. In the light guide plate 40 and the light guide plate 50 according to the second embodiment, the structures and advantages relating to the depth of the recess pattern scars as different from the light guide plate 10 of the first embodiment are specifically described.

In the light guide plate 40 shown in Fig. 7, the depths of the front surface portion recess pattern scars 40B of the front surface portion 40A and the depths of the back surface portion recess pattern scars 40E of the back surface portion 40D are formed to be deeper in a stepwise manner respectively. More specifically, when viewed from the side surface portion 40C, the recess pattern scars are formed so that the recess pattern scars on the front surface and back surface on a right side in Fig. 7 are deeper in the stepwise manner in comparison with the depths of the recess pattern scars of the front surface and back surface on a left side in Fig. 7. Where incident light L3 of the LED light is radiated from the side surface portion 40C on the left side in Fig. 7, outputting of the diffused light is averaged by changing a reflection area of the recess pattern scars around the left side in Fig. 7 from a small one to a large one because, from the optical characteristics, the light density becomes high when coming closer to the light source whereas the light density becomes low when going away from the source. Where incident light L4 of the LED light is radiated from the side surface portion on the right side in Fig. 7, outputting of the diffused light is increased on the right side but decreased on the left side by changing a reflection area of the recess pattern scars around the right side in Fig. 7 from a large one to a small one from the reason described above. That is, this recess pattern scar fabrication is an effective processing method at a time using a single side light source. The light guide plate 40 shown in Fig. 7 is applicable to the back light device 20 shown in Fig. 5 and to the sign light 30 shown in Fig. 6, which are described above. More specifically, with, e.g., the sign light 30B shown in Fig. 6(c), the LED unit 20 may be provided on a side surface of the light guide plate 40 into which incident light L3 comes.

In the light guide plate 50 shown in Fig. 8, the depths of the front surface portion recess pattern scars 50B of the front surface portion 50A and the depths of the back surface portion recess pattern scars 50E of the back surface portion 50D are formed to be deeper as proceeding to a center portion of the light guide plate 50, or in other words, the depths are formed shallow on a side of both ends of the light guide plate 50 and are formed deep at the center portion thereof. Where incident light L5 of the LED light is radiated from the side surface portion 50C on the left side in Fig. 8, outputting of the diffused light at the recess pattern scars on the left side in Fig. 8 is averaged by changing a reflection area of the recess pattern scars on the right side up to the center portion in Fig. 8 from a small one to a large one because, according to the optical characteristics from the left side to the right side in Fig. 8, the light density becomes high when coming closer to the light source whereas the light density becomes low when going away from the source. In substantially the same way, where incident light L6 of the LED light is radiated from the side surface portion 50C on the right side in Fig. 8, outputting of the diffused light at the recess pattern scars on the right side in Fig. 8 is averaged by changing a reflection area of the recess pattern scars on the left side up to the center portion in Fig. 8 from a small one to a large one because, according to the optical characteristics from the right side to the left side in Fig. 8, the light density becomes high when coming closer to the light source whereas the light density becomes low when going away from the source. Accordingly, the entire outputting of the diffused light becomes averaged. That is, this recess pattern scar fabrication is an effective processing method at a time using a double side light source. The light guide plate 50 shown in Fig. 8 is applicable to the back light device 20 shown in Fig. 5 and to the sign light 30 shown in Fig. 6, which are described above. More specifically, with, e.g., the sign light 30C shown in Fig. 6(d), the LED unit 24 may be provided respectively on side surfaces of the light guide plate 40 into which incident light L5 and incident light L6 come.

According to the light guide plate 40 and the light guide plate 50 of the second embodiment, in the manufacturing method for light guide plate using the manufacturing apparatus for light guide plate 1000 described below, the plural reflection dots having arbitrary depths are formed on one major surface of the light guide plate 50 by pressing the ultrasound processing portion 1030 to the one major surface of the light guide plate 50 deeply or shallowly in the stepwise manner. With the light guide plate 40 and the light guide plate 50 thus formed, the diffused light can be outputted in corresponding to the required light emitting surface size, and manufacturing the light guide plate matching an arbitrary specification can be optimized.

Third Embodiment

Hereinafter, a light guide plate 60 formed at a back light device or an illumination device according to the third embodiment is specifically described in referring to Fig. 9. Fig. 9 is a schematic view showing a side surface portion of the light guide plate 60 having different depths of front surface portion recess pattern scars 60B and back surface portion recess pattern scars 60E and a reflection tape 61 adhered to the light guide plate 60.

The light guide plate 60 in the third embodiment is characterized in having depths of the recess pattern scars of the front surface portion and the back surface portion different in a stepwise manner as different from the front surface portion recess pattern scars 10B and the back surface portion recess pattern scars 10E having substantially the uniform depth formed in the light guide plate 10 of the first embodiment, and in being adhered with the reflection tape 61 on one side of the side surface portion of the light guide plate 60. The structures of the light guide plate 60 other than those are substantially the same as the structures of the light guide plate 10 described in the first embodiment. In the light guide plate 60 in the third embodiment, the structures and advantages in association with depths of the recess pattern scars, which are different from the light guide plate 10 in the first embodiment are described specifically.

In regard to the structure of the light guide plate 60, the depths of the front surface portion recess pattern scars 60B of the front surface portion 60A and the depths of the back surface portion recess pattern scars 60E of the back surface portion 60D are formed to be deeper in a stepwise manner from a side surface portion 60C' on a left side in Fig. 9 to a side surface portion 60" on a right side in Fig. 9. At the side surface portion 60C" at the right end in Fig. 9, however, the depths of the front surface portion recess pattern scars 60B of the front surface portion 60A and the depths of the back surface portion recess pattern scars 60E of the back surface portion 60D both are formed to be correlatively shallow. More specifically, for example, regarding the front surface portion recess pattern scars 60B on the front surface portion 60A, for the depth of the recess pattern scars, the recess pattern scars T1 are shallowest whereas the recess pattern scars T5 are deepest among the depths of the recess pattern scars; the recess pattern scars have a relation of $T1 < T2 < T3 < T4 < T5$.

In association with advantages from optical characteristics of the light guide plate 60, when incident light L7 of the LED light is emitted from the side surface portion 60C' on the left side in Fig. 9, diffused light can be outputted evenly at the front surface portion 60A and the back surface portion 60D by changing the reflecting area of the recess pattern scars from a small one to a large one from the left side in Fig. 9, because the light density becomes higher as located closer to the light source from its optical characteristics and becomes lower as located remoter. Reflection light L8 occurs upon reflection of the incident light L7 of the LED light at the side surface portion 60C" by the reflection tape 61 adhering to the side surface portion 60C" of the light guide plate 60. Because the reflection light L8 is converted to diffused light at the recess pattern scars, a rate converted from the LED light into the diffused light increases. The reflection light L8 thus generated affects the diffused light at recess pattern scars located adjacently to the side surface portion 60C". Accordingly, both of the depths of the front surface portion recess pattern scars 60B on the front surface portion 60A and the depths of back surface portion recess pattern scars 60E on the back surface portion 60D are formed to be correlatively shallow at the side surface portion 60C". The light guide plate 60 shown in Fig. 9 is applicable to the back light device 20 shown in Fig. 5 and the sign light 30 shown in Fig. 6 described above. More specifically, for example, the sign light 30B shown in Fig. 6(c) is used by providing the LED unit 21 at the side surface portion 60C' of the light guide plate 60 to which the incident light L7 is radiated.

According to the light guide plate 60 of the third embodiment, in the manufacturing method for light guide plate using the manufacturing apparatus for light guide plate 1000 described below, the plural reflection dots having arbitrary depths are formed on one major surface of the light guide plate by pressing the ultrasound processing portion 1030 to the one major surface of the light guide plate deeply or shallowly in the stepwise manner. With the light guide plate 60 thus formed even though having the structure adhering the reflection tape 61 on one side of the side surface portion of the light guide plate 60, the diffused light can be outputted in corresponding to the required light emitting surface size, and manufacturing the light guide plate matching an arbitrary specification can be optimized.

Fourth Embodiment

Hereinafter, a light guide plate 70 according to the fourth embodiment of the invention and a back light device are described in referring to Fig. 10 through Fig. 12. Figs. 10 are schematic views showing a fabrication f the light guide plate 70; Fig. 10 (a) is a perspective view showing the light guide plate 10 before fabrication for curving; Fig. 10(b) is a perspective view showing the light guide plate 70 after fabrication for curving. Fig. 11 is a perspective view showing the light guide plate 70.

The light guide plate 70 according to the fourth embodiment is characterized in having a curve of a prescribed radius of curvature as different from the light guide plate 10 formed in a flat plate shape in the first embodiment. The structures of the light guide plate 70 other than those are substantially the same as the structures of the light guide plate 10 described in the first embodiment. In the light guide plate 70 in the fourth embodiment, the structures and advantages different from those of the light guide plate 10 in the first embodiment are described specifically.

The light guide plate 70 is structured, in substantially the same way as the light guide plate 10, of a plate shaped portion made of. e. g. a polymethyl methacrylate resin plate formed in a prescribed size with plural recess pattern scars. More specifically, the size of the plate shaped portion is in a rectangular shape of 100 mm x 100 mm through 1450 mm x 1030 mm equivalent to B0 size (JIS standard) and corresponds to a thickness of 2 mm through 12 mm. As shown in Fig. 11, front surface portion recess pattern scars 70B are formed on the front surface portion 70A of the light guide plate 70 whereas back surface portion recess pattern scars 70E are formed on the back surface portion 70D of the light guide plate 70. The recess pattern scars are respectively formed in a pyramid shape scar having, e.g., a long diameter of 0.6 mm and a depth of 0.4 mm and are formed with a pitch of, e.g., 1.2, 1.5, 2.0, and 8.0 as for a pitch pattern in a matrix shaped molding scar. Such the light guide plate 70 is formed by curving the plate to have a prescribed radius of curvature as shown in Fig. 10(b) by pressing the plate with a certain pressure in a state contacting the plate to, e.g., a concave surface tool having the prescribed radius of curvature, not shown, after applying heat of a prescribed temperature to the light guide plate 10 formed in a flat plate shape as shown in Fig. 10(a).

Next, a structural example of a back light device 80 disposed with the light guide plate 70 in this embodiment is described in referring to Fig. 12(a) through Fig. 12(e).

Figs. 12 are perspective views showing the back light device 80 using the light guide plate 70 in an exploded state to respective structural members; Fig. 12(a) is a perspective view showing a back light device 80A in a case that no diffusing plate 83 and no reflection sheet 82 is provided on either surface of the light guide plate 70; Fig. 12(b) is a perspective view showing a back light device 80B in a case that the reflection sheet 82 is provided on only one surface of the light guide plate 70; Fig. 12(c) is a perspective view showing the back light device 80C in a case that the diffusing plate 83 is provided on only one surface of the light guide plate 70 and that the reflection sheet 82 is provided on the other surface of the light guide plate 70; Fig. 12(d) is a perspective view showing a back light device 80D in a case that the diffusing plate 83 and the reflection sheet 82 are provided on each surface of the light guide plate 70; Fig. 12(e) is a perspective view showing a back light device 80E at which an LED unit 81 is arranged on each end of the light guide plate 70 in the back light device 80D shown in Fig. 12(d). The respective back light devices 80 formed with the light guide plate 70 shown in Fig. 12(a) through Fig. 12(d) correspond to the respective back light devices 20 formed with the light guide plate 10 described in referring to Fig. 5(a) through Fig. 5(d).

With the back light device 80, for example, the LED unit 81 is disposed on a right side or a left side of the curving light guide plate 70 in Fig. 12(a) through Fig. 12(d). Where the LED unit 81 is disposed in this way, differences of the light between brightness and darkness become large in a surface of the light guide plate 70 if the recess pattern scars are formed only on the front surface portion 70A of the light guide plate 70. Differences of the light between brightness and darkness, however, become small in a surface of the light guide plate 70 if the recess pattern scars are formed even on the back surface portion 70D of the light guide plate 70. If the LED unit 81 is disposed on an upper side or a lower side of the curving light guide plate 70 in Fig. 12(a) through Fig. 12(d), differences of the light between brightness and darkness become small in a surface of the light guide plate 70 even where the recess pattern scars are formed only on the front surface portion 70A of the light guide plate 70.

As described above, according to the manufacturing method for the light guide plate 70 in the fourth embodiment, the light guide plate in a large size can be formed in a shape having an arbitrary radius of curvature by forming the plate to have a curve in the prescribed radius of curvature after applying heat in the prescribed temperature to the light guide plate 10 formed in the flat plate shape. Accordingly, further more people can see the plate at one time even where the plate is located at outdoors by forming the light guide plate 70 into the shape having the arbitrary radius of curvature in accordance with a necessary viewing range.

Although in the first through fourth embodiments described above the light guide plates are described as optical devices used for the back light devices for sign lights, the light guide plate is not limited to those embodiments, and can be modified or altered properly as far as not deviated from the summery of the invention. More specifically, the light guide plate can be used for, e.g., a back light device for liquid crystal display. The light guide plate can be structured for, e.g., an illumination device used for LED illumination device. The LEDs disposed at the LED unit are not limited to white LED, but can be LEDs of any one color among white, red, blue, and green, or a combination of LEDs of respective colors.

Finally, a manufacturing apparatus for light guide plate for manufacturing the light guide plates in the first through fourth embodiments of the invention and a manufacturing method for light guide plate using the manufacturing apparatus for light guide plate are described specifically in referring to Fig. 13 through Fig. 20.

First, a structure of the manufacturing apparatus for light guide plate 1000 according to the invention is described in referring to Fig. 13 and Fig. 15.

The manufacturing apparatus for light guide plate 1000 as shown in Fig. 13 includes a machine base 1010 for mounting a member structuring the manufacturing apparatus for light guide plate 1000, a work table 1020 providing a light guide plate substrate D as a processing target in a way to be processed, a securing mechanism for securing the light guide plate substrate D on the work table 1020, an ultrasound processing portion 1030 for rendering an ultrasound processing treatment to the light guide plate substrate D, and a transfer mechanism 1040 transferring the ultrasound processing portion 1030 based on inputted processing information. The manufacturing apparatus for light guide plate 1000 thus formed performs the ultrasound processing treatment to a prescribed position on the light guide plate substrate D by transferring the ultrasound processing portion 1030 with the transfer mechanism 1040 based on the control of the control unit not shown and by pushing down the ultrasound processing portion 1030 to the light guide plate substrate D. For conveniences of the description, the description is made using a three-dimensional orthogonal coordinate or two-dimensional orthogonal coordinate shown in each drawing. Hereinafter, the respective structural members structuring the manufacturing apparatus for light guide plate 1000 are described specifically.

The machine base 1010 is a base for mounting members structuring the manufacturing apparatus for light guide plate 1000, and is a base in a box shape having a two layered structure made of an upper stage plate 1011 and a lower stage plate 1012. The work table 1020 and the transfer mechanism 1040 are provided at the upper stage plate 1011 of the machine base 1010. A vacuum pump 1023 and an ultrasound oscillator 1031 are mounted on the lower stage plate 1012 of the machine base 1010. A controlling portion 1013 is provided on a side surface of the machine base 1010 for inputting processing information relating to the processing method of the light guide plate substrate D by a user and for controlling the entire manufacturing apparatus for light guide plate 1000. Adjustable legs 1014 are provided at corners of the lower surface of the machine base 1010 for rendering the entire body of the manufacturing apparatus for light guide plate 1000 travelable and for rendering the slant of the manufacturing apparatus for light guide plate 1000 adjustable.

The work table 1020 is a table for disposing the light guide plate substrate D as a processing target so as to be processed. With the work table 1020 thus formed, the securing mechanism absorbs by vacuum the light guide plate substrate D on the work table 1020 by reducing the interior pressure in holes 1022 by driving the vacuum pump 1023. The securing mechanism thus formed is constituted of the vacuum pump 1023, a tube material, not shown, connected to the vacuum pump 1023, vacuum chucking members not shown but disposed in the holes 1022, and a control member not shown for controlling the vacuum chucking members.

The ultrasound processing portion 1030 is for performing the ultrasound processing treatment to the light guide plate substrate D. With the ultrasound processing portion 1030 thus formed, a horn portion 1032 performs ultrasound processing treatments on the surface of the light guide plate substrate D based on a drive signal supplied from the ultrasound oscillator 1031. The horn portion 1032 thus arranged conveys vibrations to the light guide plate substrate D upon contacting to the light guide plate substrate D as shown in Fig. 15(b), and includes a tip portion 1034 for rendering the ultrasound processing treatment to the surface of the light guide plate substrate D, a vibrator 1033 having a piezoelectric element not shown and a corn member, and a vibrator casing not shown covering a part of the vibrator 1033. The fabrication dots 1034A in, e.g., a pyramid shape are formed at the tip portion 1034 of the ultrasound processing portion 1030 in a matrix shape of four rows and four columns as shown in Fig. 14.

In the ultrasound processing portion 1030, in a case where the entire ultrasound processing portion 1030 is moved, the transfer mechanism 1040 is used, and transfers the horn portion 1032 in a Z-axis direction by a horn transfer portion according to a pattern fabricated on the surface of the light guide plate substrate D. For example, in a case where plural recess pattern scars are fabricated using the manufacturing apparatus for light guide plate 1000, the ultrasound processing treatment can be effectively performed on the light guide plate substrate D by transferring the horn portion 1032 using the horn transfer portion. The horn transfer portion thus formed moves the horn portion 1032 in a vertical direction using an air cylinder, not shown, coupled to a compressor not shown. Although in this embodiment the horn portion 1032 is moved in the vertical direction using the air cylinder, the horn portion 1032 can be moved in the vertical direction using a self-weight of the horn portion 1032 and returning force of a resilient member where the resilient member is arranged inside the horn portion 1032.

Referring to Fig. 15, a detection mechanism for a processing start height of the light guide plate substrate D in the ultrasound processing portion 1030 is described. As shown in Fig. 15(a), the ultrasound processing portion 1030 is urged in a lower direction by the self-weight and the like, and a stopper member 1049 finely adjustable of a position via a support block 1048 is formed at a plate 1047 to support the ultrasound processing portion 1030. The ultrasound processing portion 1030 now begins moving in a down direction based on the processing information inputted via the controlling portion 1013, and the tip of the horn portion 1032 first contacts the surface of the light guide plate substrate D after reducing the moving speed in the lower direction near the light guide plate substrate D, so that the ultrasound processing portion 1030 is stopped as shown in Fig. 15(b). As a movable table 1046 further continues moving downward, the ultrasound processing portion 1030 moves in an upper direction, thereby rendering the ultrasound processing portion 1030 and the stopper member 1049 separated as shown in Fig. 15(c) to cancel the supply of electric power at this portion.

The transfer mechanism 1040 is for transferring the ultrasound processing portion 1030 based on positional information included in the inputted processing information regarding the processing method for the light guide plate substrate D. The transfer mechanism 1040 thus formed includes an X-axis rail member 1041 secured on the upper stage plate 1011, a Y-axis rail member 1042, and a Z-axis rail member 1043. The ultrasound processing portion 1030 is arranged as movable in the Z-axis direction along the Z-axis rail member 1043.

Next, the manufacturing method for light guide plate 1100 is described. More specifically, formation of recess pattern scars on the light guide plate 1100, in consideration of deviations in the shape of the light guide plate 1000, is described in referring to Figs. 16.

Figs. 16 are schematic views showing a state of the embossing process for forming recess pattern scars formed on the light guide plate 1100; Fig. 16(a) through Fig. 16(e) are schematic views sequentially showing states of measuring the processing start reference height of the light guide plate 1100 prior to the embossing process and then performing the embossing process to the light guide plate 1100 in compliance with the processing start reference height.

As shown in Fig. 16(a), a processing start reference height E1 of the surface of the light guide plate 1100 is detected by rendering a movable type probe S disposed at a measuring portion, not shown, of the manufacturing apparatus for light guide plate 1000 contact to the surface of the light guide plate 1100. A transparent methacrylate resin plate in a prescribed shape may be used for the light guide plate 1100. The probe S is not limited to a mechanical structure and may have, e.g., a structure receiving reflecting light from the surface of the light guide plate 1100 upon emitting a measuring light from a measuring portion, not shown, of the manufacturing apparatus for light guide plate 1000.

As shown in Fig. 16(b), after the ultrasound processing portion 1030 attached to the manufacturing apparatus for light guide plate 1000 is moved to a position above the front surface portion 1100A detecting the processing start reference height E1, ultrasound vibrations are applied to the fabrication dots 1034A provided at the tip of the ultrasound processing portion 1030 with the processing start reference height E1 as a reference, and the ultrasound processing portion 1030 is moved down to a prescribed depth from the processing start reference height E1 of the front surface portion 1100A. A processing start reference height H2 on a surface of the light guide plate 1100 serving as a subsequent ultrasound processing place is detected by the movable type probe S disposed at the measuring portion of the manufacturing apparatus for light guide plate 1000.

As shown in Fig. 16(c), after the ultrasound processing portion 1030 attached to the manufacturing apparatus for light guide plate 1000 is moved to a position above the front surface portion 1100A detecting the processing start reference height E2, ultrasound vibrations are applied to the fabrication dots 1034A provided at the tip of the ultrasound processing portion 1030 with the processing start reference height E2 as a reference, and the ultrasound processing portion 1030 is moved down to a prescribed depth from the processing start reference height E2 of the front surface portion 1100A. A processing start reference height E3 on a surface of the light guide plate 1100 serving as a subsequent ultrasound processing place is detected by the movable type probe S disposed at the measuring portion of the manufacturing apparatus for light guide plate 1000.

As shown in Fig. 16(d), after the ultrasound processing portion 1030 attached to the manufacturing apparatus for light guide plate 1000 is moved to a position above the front surface portion 1100A detecting the processing start reference height E3, ultrasound vibrations are applied to the fabrication dots 1034A provided at the tip of the ultrasound processing portion 1030 with the processing start reference height E3 as a reference, and the ultrasound processing portion 1030 is moved down to a prescribed depth from the processing start reference height E3 of the front surface portion 1100A. A processing start reference height E4 on a surface of the light guide plate 1100 serving as a subsequent ultrasound processing place is detected by the movable type probe S disposed at the measuring portion of the manufacturing apparatus for light guide plate 1000.

Similarly as shown in Fig. 6(e), after the ultrasound processing portion 1030 attached to the manufacturing apparatus for light guide plate 1000 is moved to a position above the front surface portion 1100A detecting the processing start reference height E4, ultrasound vibrations are applied to the fabrication dots 1034A provided at the tip of the ultrasound processing portion 1030 with the processing start reference height E4 as a reference, and the ultrasound processing portion 1030 is moved down to a prescribed depth from the processing start reference height H4 of the front surface portion 1100A.

Next, advantages from the formation of the recess pattern scars formed on the light guide plate 1100 as described above is described specifically in referring to Fig. 17 and Fig. 18.

Figs. 17 are schematic views showing a side surface portion 1110C of the light guide plate 1110 according to the invention; Fig. 17(a) is a schematic view showing the side surface portion 1110C of the light guide plate 1110 in a case where the light guide plate 1110 has no curving or deviation in thickness; Fig. 17 (b) is a schematic showing the side surface portion 1110C of the light guide plate 1110 in a case where the light guide plate 1110 has some curving or deviation in thickness. Fig. 18 is a schematic view showing the side surface portion 1120A of the light guide plate 1120 in a case where the light guide plate 1120 has some curving or deviation in thickness in a conventional manufacture of the light guide plate 1120.

In a case that the light guide plate 1110 has no curving or unevenness in thickness as shown in Fig. 17(a), front surface portion recess pattern scars 1110B having a constant depth with respect to a front surface portion 1110A can be formed regardless the position of the front surface portion 1110A of the light guide plate 1110 even without detecting any processing start reference height of the front surface portion 1110A at each processing. In substantially the same way, back surface portion recess pattern scars 1110E having a constant depth with respect to a back surface portion 1110D can be formed regardless the position of the back surface portion 1110D of the light guide plate 1110.

As shown in Fig. 17(b), in a case that the light guide plate 1110 has some curving or unevenness in thickness, front surface portion recess pattern scars 1110B having a constant depth with respect to the front surface portion 1110A cannot be formed if no detection of the processing start reference height of the front surface portion 1110A is made at each processing. In substantially the same way, back surface portion recess pattern scars 1110E having a constant depth with respect to the back surface portion 1110D cannot be formed if no detection of the processing start reference height of the back surface portion 1110D is made at each processing.

As the substrate for the light guide plate 1110 herein, e.g., a resin plate, or namely, a methacrylate resin plate is used. Such a methacrylate resin plate is manufactured by an extrusion method, and individual deviations in thickness of the methacrylate resin plate may reach approximately plus and minus one mm for having a thickness of eight mm as a reference value. Unevenness in thickness for a single methacrylate resin plate tends to be large, and more specifically, the difference between the maximum thickness and the minimum thickness may reach about 0.4 mm. The methacrylate resin plate may be deformed in a reversely warping manner upon absorption of moisture. Thus, the methacrylate resin plate suffers from deviations in the thickness component due to individual differences, unevenness in thickness, and deformation from warping or the like. To the contrary, the depth of the front surface portion recess pattern scars 1110B formed on the front surface portion 1110A of the light guide plate 1200 and the depth of the back surface portion recess pattern scars 1110E formed on the back surface portion 1110D of the light guide plate 1110 are frequently set to 0.3 mm to 0.5 mm.

Accordingly, in the processing of the methacrylate resin plate serving as the substrate for the light guide plate 1110, it is required that after detecting the height with the movable type probe S attached to the measuring portion of the manufacturing apparatus for light guide plate 1000, ultrasound vibrations are applied to the fabrication dots 1034 provided at the tip of the ultrasound processing portion 1030 with the processing start reference height as a reference, and the ultrasound processing portion 1030 is moved down to a prescribed depth from the surface of the methacrylate resin plate.

If no processing start reference height on the surface of the methacrylate resin plate is detected, in a way of the conventional light guide plate 1120 as shown in Fig. 18, front surface portion recess pattern scars 1120B having a constant depth with respect to the front surface portion 1120A of the light guide plate 1120 cannot be formed. In substantially the same way, back surface portion recess pattern scars 1120E having a constant depth with respect to the back surface portion 1120D of the light guide plate 1120 cannot be formed.

Next, referring to Fig. 19 and Fig. 20, the manufacturing method for light guide plate for precisely forming recess pattern scars close to designed values according to the invention is described.

In the manufacturing method for light guide plate, as shown in Fig. 20(a), when the processing points, or the fabrication dots 1034A of the tip portion 1034 of the horn portion 1032 come to contact the major surface of the light guide plate substrate D by moving the horn portion 1032 serving as an ultrasound processing horn down to the light guide plate substrate D, the contact is detected with the stopper member 1049 as described above in referring to Fig. 15(c). Fig. 20 shows an example forming the recess pattern scars extending in a matrix shape of the four rows and four columns made in pyramid shapes with respect to the light guide plate substrate D. It is assumed that a time detecting that the fabrication dots 1034 contact to the major surface of the light guide plate substrate D is time ta. At time ta, an ultrasound application timer and a holding timer start, and ultrasound is applied to the horn portion 1032 based on the control from the ultrasound oscillator 1031. The operation times of the ultrasound application timer and the holding timer are previously set in the ultrasound oscillator 1031. More specifically, the operation time of the holding timer is up to time td described below, and the operation time of the ultrasound application timer is up to time tc described below. The time-up signal of the holding timer is inputted in a sequencer in the controlling portion not shown, and is used for a trigger for moving up the horn portion 1032 at the time td described below.

While the fabrication dots 1034A of the tip portion 1034 of the horn portion 1032 are contacting to the light guide plate substrate D, energy from the ultrasound vibration generated at the horn portion 1032 is conveyed to the light guide plate substrate D, and the light guide plate substrate D contacting to the fabrication dots 1034A is partly melt to form gradually recess pattern scars on the light guide plate substrate D. When it reaches time tb upon lapsing a prescribed time from time ta, the horn portion1032 is stopped from moving down. At time tb, although recess pattern scars having a designed prescribed depth are formed on the major surface of the light guide plate substrate D, a front surface portion D1 of the recess pattern scars formed on the light guide plate substrate D is not flat and at a high temperature because it is immediately after the formation, and a peripheral portion D2 of the recess pattern scars is at a high temperature due to the ultrasound processing.

If the horn portion 1032 is moved up under this state, the recess pattern scars do not come into a shape close to the designed value because the shape of the fabrication dots 1034A are not adequately transferred into the recess pattern scars on the light guide plate substrate D. Moreover, because the front surface portion D1 and the peripheral portion D2 of the recess pattern scars are not adequately hardened due to the ultrasound processing, the fabrication dots 1034A of the tip portion 1034 of the horn portion 1032 are separated in a state still adhering to the recess pattern scars on the light guide plate substrate D, thereby deforming the shape of the recess pattern scars. Therefore, the ultrasound application to the horn portion 1032 is continued until time tc.

At time tc, as shown in Fig. 20(c), a front surface portion D3 of the recess pattern scars formed in light guide plate substrate D has a reflection surface in compliance with the shape of the fabrication dots 1034A upon removal of stresses or the like remaining in the recess pattern scars because it takes an adequate time from the formation of the recess pattern scars. That is, at time tc, the scar's shape becomes a shape close to the designed value because the shape of the fabrication dots 1034A are adequately transferred into the front surface portion D3 of the recess pattern scars on the light guide plate substrate D. The front surface portion D3 and the peripheral portion D2 of the recess pattern scars, however, are not yet adequately hardened due to the ultrasound processing. At time tc, therefore, the ultrasound application to the horn portion 1032 is stopped, thereby cooling the front surface portion D3 and the peripheral portion D2 of the recess pattern scars formed on the light guide plate substrate D.

At time td, as shown in Fig. 20(d), the front surface portion D3 and the peripheral portion D2 of the recess pattern scars formed on the light guide plate substrate D are cooled down to an adequately cooled temperature. More specifically, at time td, the temperature of, e.g., an acrylic resin as the light guide plate substrate D is reduced from around 90 degrees Celsius as a softening temperature of acrylic resin, and comes into a state adequately cooled. Then, at time td, the horn portion 1032 is moved up. The recess pattern scars formed on the light guide plate substrate D come to have a shape close to the designed value because the shape of the fabrication dots 1034A are adequately transferred into the recess pattern scars on the light guide plate substrate D. The fabrication dots 1034A at a time moving up the horn portion 1032 are well separated without affecting the shapes from the front surface portion D3 to the peripheral portion D2 of the recess pattern scars of the light guide plate substrate D, because the front surface portion D3 and the peripheral portion D2 of the recess pattern scars of the light guide plate substrate D are hardened by adequate cooling. It is to be noted that the manufacturing method for light guide plate at time te through time th is substantially the same way as the manufacturing method for light guide plate at time ta through time td.

A time from time tc to time td is set between, e.g., 0.05 sec. and 0.3 sec. in consideration of the materials of the light guide plate substrate D, the takt time for manufacturing, etc. Similarly, a time from time tb to time td is set to be, e.g., around twice of the time from time ta to time tb. A tip height of the ultrasound processing horn is the height of the fabrication dots 1034A of the tip portion 1034 of the horn portion 1032, and a height h1 during moving is set to, e.g., 2 mm by making a processing start height h2 for ultrasound processing as a position of the major surface of the light guide plate substrate D as a reference. Similarly, a processing completion depth h3 for ultrasound processing is set to, e.g., 0.73 mm by making the processing start height h2 for ultrasound processing as the position of the major surface of the light guide plate substrate D as a reference.

The times from time ta to time tc may be set as follows. For example, a set value regarding the depth of the recess pattern scars is assumed as 0.11, 0.12, 0.13, 0.14, and 0.15 respectively, an actual depth of the recess pattern scars formed on the light guide plate substrate D is set to 0.73 mm, 0.76 mm, 0.79 mm, 0.82 mm, and 0.85 mm, respectively. That is, the actual depth of the recess pattern scars formed on the light guide plate substrate D is made deeper by 0.03 mm each as increasing 0.01 each the set value for the depth of the recess pattern scars. The depth of the recess pattern scars formed on the light guide plate substrate D can be altered precisely by controlling the ultrasound application time for the ultrasound processing portion 1030 based on the set value relating to the depth of the recess pattern scars in this way.

For example, to obtain recess pattern scars having a depth of, e.g.,0.73 mm, the application time of ultrasound to the ultrasound processing portion 1030 expressed by a general formula described below is set as $T(sec) = (0.1 + 0.01) \times 1.1 = 0.121$ sec. That is, to make the depth deeper by 0.03 mm each so that the depths of the recess pattern scars become 0.73 mm, 0.76 mm, 0.79 mm, 0.82 mm, and 0.85 mm, respectively, increased time $\Delta T(sec.)$ for applying ultrasound is set to be $0.11 \times 1.1 = 0.011$ sec. longer each.

Time t1 is a time for obtaining the processing reference depth, and more specifically, it is a time for moving the tip portion 1034 of the horn portion 1032 down to the prescribed processing depth from the surface of the light guide plate substrate D. Similarly, time t2 is a time for obtaining a prescribed change amount regarding the depth of the recess pattern scars, and more specifically, it is an extended time in which the tip portion 1034 of the horn portion 1032 formed at the ultrasound processing portion 1030 is continuously contacted to the surface of the light guide plate substrate D. Coefficient K is a collection coefficient for obtaining the depth of the recess pattern scars as designed. Time t1 can be changed as appropriate according to the number of tips of the multi-horn (or namely fabrication dot number) and processing specifications of processing materials. Time t2 and coefficient K can be changed properly according to processing specifications of processing materials.

Formula 1

$$T(sec.) = (t1 + t2) \times K$$

Wherein: t1 = time for obtaining the processing reference depth; t2 = time for obtaining a prescribed change amount regarding the depth of the recess pattern scars; K = coefficient.

Although in the manufacturing method for light guide plate described above the structure that ultrasound application to the horn portion 1032 serving as the ultrasound processing horn is controlled on and off based on prescribed times is described, this invention is not limited to such a structure. More specifically, a structure may be used for adapting a control method in which electric energy of ultrasound applied to the horn portion 1032 during a period from time tb to time tc is lower than electric energy of ultrasound applied to the horn portion 1032 during a period from time ta to time tb. Similarly, a structure may be used in which controlling as to continue the ultrasound application in a state that electric energy of ultrasound applied to the horn portion 1032 during the period from time tb to time tc is reduced without completely stopping ultrasound applied to the horn portion 1032 during the period from time tc to time td.

As described above, according to the manufacturing apparatus for light guide plate 1000 and the manufacturing method for light guide plate of the invention, after the recess pattern scars are formed with the prescribed depth on the light guide plate substrate D, the position of the ultrasound processing horn is held under the state that the ultrasound application to the ultrasound processing horn is continued, and then the ultrasound application to the ultrasound processing horn is stopped in a state that the position of the ultrasound processing horn is held during the further prescribed period of time after a certain time lapses. That is, the horn portion 1032 is separated from the light guide plate substrate D in a state that the shape of the fabrication dots 1034A is adequately transferred to the recess pattern scars formed on the light guide plate substrate D and that the peripheral portion of the recess pattern scars of the light guide plate substrate D is adequately hardened by cooling. Accordingly, the recess pattern scars formed on the light guide plate substrate D have the reflection surface along the shape of the fabrication dots 1034A, and the recess pattern scars having a shape close to the designed value are formed precisely on the major surface of the light guide plate substrate D. According to the light guide plate manufactured by the manufacturing apparatus for light guide plate 1000 and the manufacturing method for light guide plate thus provided, uniform diffused light is obtainable on the surface of the light guide plate from the recess pattern scars formed accurately where LED light or the like is entered from an end surface of the light guide plate.

The manufacturing apparatus for light guide plate manufacturing the light guide plate of the first through fourth embodiments of the invention is not limited to the embodiments described above, and can be modified properly as far as not deviated from the subject matter of the invention. For example, although it is described that the ultrasound processing portion 1030 is used for the processing portion in the embodiments described above, a radio frequency soldering iron using, so called, a radio frequency inductance heating method may be used. The ultrasound processing portion 1030 may be formed detachably from the movable table 1046, and the radio frequency soldering iron may be attached thereto. A digital microscope may be formed detachably to a front surface of the ultrasound processing portion 1030. It is to be noted that if the digital microscope is attached, processing status can be monitored at any time.

Description of reference numbers

**[0093]**

| | |
|---|---|
| 10,40,50,60,70,1100,1110,1120 | light guide plate |
| 10A,40A,50A,60A,70A,1100A,1110A,1120A | front surface portion |
| 10B,40B,50B,60B,70B,1110B,1120B | front surface portion recess pattern scars |
| 10C,40C,50C,60C',60C",70C,1110C,1120C | side surface portion |
| 10D,40D,50D,60D 70D,1110D,1120D | back surface portion |

| | |
|---|---|
| 10E,40E,50E,60E,70E,1110E,1120E | back surface portion recess pattern scars |
| 10M | one surface |
| ION | the other surface |
| 61 | reflection tape |
| 20,20A,20B,20C,20D,80,80A,80B,80C,80D,80E | back light device |
| 21,24,81 | LED unit |
| 22,82 | reflection sheet |
| 23,23A,23B,83,83A,83B | diffusing plate |
| 30,30A,30B | sign light |
| 31,31A,31B,31C | sign display plate |
| 1000 | manufacturing apparatus for light guide plate |
| 1010 | machine base |
| 1011 | upper stage plate |
| 1012 | lower stage plate |
| 1013 | controlling portion |
| 1014 | adjustable leg |
| 1020 | work table |
| 1021 | plate member |
| 1022 | hole |
| 1023 | vacuum pump |
| 1030 | ultrasound processing portion |
| 1031 | ultrasound oscillator |
| 1032 | horn portion |
| 1033 | vibrator |
| 1034 | tip portion |
| 1034A | fabrication dots |
| 1040 | transfer mechanism |
| 1041 1 | X-axis rail member |
| 1042 | Y-axis rail member |
| 1043 | Z-axis rail member |
| 1046 | movable table |
| 1047 | plate |
| 1048 | support block |
| 1049 | stopper member |
| D | light guide plate substrate |
| D1 | front surface portion |
| D2 | peripheral portion |
| D3 | front surface portion |
| h1 | height during transfer |
| h2 | processing start height |
| h3 | processing completion depth |
| S | probe |
| E1,E2,E3,E4 | processing start reference height |
| P1 | pitch |
| P2 | half pitch |
| L1,L2,L3,L4,L5,L6,L7 | incident light |
| L8 | reflection light |
| T1,T2,T3,T4,T5 | recess pattern scars |

## Claims

1. A manufacturing method for light guide plate rendering light enter from a side surface of a light guide plate substrate and output from a major surface, the manufacturing method comprising the steps of:

arranging fabrication dots in a matrix shape on a tip surface in a rectangular shape of an ultrasound processing horn;
forming, on one major surface of the light guide plate substrate, reflection dots reflecting the fabrication dots on the tip surface by pressing the tip surface of the ultrasound processing horn to the one major surface of the light guide plate substrate;

forming the reflection dots in a prescribed range on the one major surface of the light guide plate substrate by correlatively transferring the ultrasound processing horn within the major surface with respect to the light guide plate substrate to repeat formation of the reflection dots; and

forming the reflection dots on each major surface of the light guide plate substrate so that the reflection dots are not located at the same position between the opposite major surfaces.

2. The manufacturing method for light guide plate according to Claim 1, further comprising the step of rendering the light guide plate substrate curving as to have a prescribed radius of curvature upon heat application to the light guide plate substrate.

3. The manufacturing method for light guide plate according to Claim 1, wherein each of the fabrication dots is in a pyramid shape.

4. The manufacturing method for light guide plate according to Claim 3, wherein the fabrication dots are made in a pyramid shape in the same shape formed in the matrix shape having an equal interval.

5. The manufacturing method for light guide plate according to Claim 3, wherein at least one direction of extending directions of the ridges of the pyramid shape of the fabrication dots is substantially parallel to an incident direction of the light entering from the side surface of the light guide plate substrate.

6. The manufacturing method for light guide plate according to Claim 1, wherein, after forming the reflection dots reflecting the fabrication dots by the ultrasound processing horn, the reflection dots reflecting the fabrication dots are subsequently formed by the ultrasound processing horn upon correlatively transferring the ultrasound processing horn by a portion of the range of the tip surface with respect to the light guide plate substrate.

7. The manufacturing method for light guide plate according to Claim 1, wherein the light guide plate substrate is made of a transparent resin flat plate.

8. The manufacturing method for light guide plate according to Claim 1, wherein the reflection dots are formed either or both of the major surfaces of the light guide plate substrate, which are opposite to each other.

9. The manufacturing method for light guide plate according to Claim 1, wherein the reflection dots are formed either or both of the major surfaces of the light guide plate substrate, which are opposite to each other.

10. A light guide plate manufactured by the manufacturing method for a light guide plate according to any one of Claim 1 through Claim 9.

11. A back light device having the light guide plate as set forth in Claim 10.

12. An illumination device having the light guide plate as set forth in Claim 10.

13. A light guide plate manufacturing apparatus comprising:

a light guide plate substrate securing unit for securing a light guide plate substrate serving as a substrate prior to fabrication to a light guide plate;

an ultrasound processing horn for forming a recess unit by partly melting a major surface of the light guide plate substrate secured at the light guide plate substrate securing unit with ultrasonic vibration;

a transfer mechanism for transferring the ultrasound processing horn along the major surface of the light guide plate and for pressing down the ultrasound processing horn to the major surface of the light guide plate substrate; and

a control unit for controlling the ultrasound processing horn and the transfer mechanism to hold a position of the ultrasound processing horn while application of the ultrasound to the ultrasound processing horn is continued after the recess portion is formed down to a prescribed depth in the light guide plate substrate.

14. The light guide plate manufacturing apparatus according to Claim 13, wherein the control unit holds a position of the ultrasound processing horn while application of the ultrasound to the ultrasound processing horn is continued after the recess portion is formed down to a prescribed depth in the light guide plate substrate, and stops the application of the ultrasound to the ultrasound processing horn while holding the position of the ultrasound processing horn after passing a certain period of time.

15. The light guide plate manufacturing apparatus according to Claim 13, wherein the control unit controls the ultrasound processing horn and the transfer mechanism to place the ultrasound processing horn remote from the light guide plate substrate after the temperature of the recess portion heated by the ultrasound processing horn is lowered to or below a softening temperature by forming the recess portion down to a prescribed depth in the light guide plate substrate upon pressing the ultrasound processing horn down to the light guide plate substrate.

16. A manufacturing method for light guide plate outputting, from a major surface, light entered from a side surface, comprising the steps of
forming a recess portion on the light guide plate substrate to a prescribed depth by pressing the ultrasound processing horn down to the light guide plate substrate serving as a substrate prior to formation of the light guide plate; and
holding the position of the ultrasound processing horn while the ultrasound is continuously applied to the ultrasound processing horn.

17. The manufacturing method for light guide plate according to Claim 16, wherein in the step of holding the ultrasound processing horn, the position of the ultrasound processing horn is held while the ultrasound is continuously applied to the ultrasound processing horn, and then the application of the ultrasound to the ultrasound processing horn is stopped while the position of the ultrasound processing horn is held after passing a prescribed time.

18. The manufacturing method for light guide plate according to Claim 16, wherein in the step of holding the ultrasound processing horn, the ultrasound processing horn is moved away from the light guide plate substrate after the temperature of the recess portion heated by the ultrasound processing horn is lowered to or below a softening temperature.

19. A light guide plate manufactured by the manufacturing method for light guide plate according to Claim 16.

FIG 1

10

10A  10B        10C        10D  10E

(a)              (b)              (c)

FIG 2

10

10B  10A

FIG 3

10M

10C

10E — 10B' — 10B — 10N

(a)

10B' — 10B — 10A

10C

10E — 10E' — 10D

(b)

FIG 4

(a)

(b)

(c)

(d)

FIG 5

(a)

(b)

(c)

(d)

FIG 6

(a)

(b)

(c)

(d)

FIG 7

L3 → ... 40A 40B 40 ... ← L4

40D 40E

40C

FIG 8

L5 → ... 50A 50B 50 ... ← L6

50D 50E

50C

FIG 9

T1  T2  60A  T3  T4  60  T5  T4  L8  61

L7 → ... 60B  60D 60E  60C"

60C'

FIG 10

10

(a)

70

(b)

FIG 11

FIG.12

(a)　　　　　(b)　　　　　(c)　　　　　(d)　　　　　(e)

EP 2 461 083 A1

FIG 13

FIG 14

(a)

(b)

FIG 15

(a)

(b)

(c)

FIG 16

(a)

(b)

(c)

(d)

(e)

FIG 17

1110

1110A    1110B

(a)

1110C

1110D    1110E

1110

1110A    1110B

(b)

1110C

1110D    1110E

FIG 18

1120

1120A    1120B

1120C

1120D    1120E

FIG.19

FIG 20

(a)

(b)

(c)

(d)

**INTERNATIONAL SEARCH REPORT**

| International application No. |
| --- |
| PCT/JP2010/003512 |

A.   CLASSIFICATION OF SUBJECT MATTER
*F21S2/00*(2006.01)i, *F21V8/00*(2006.01)i, *G02B6/00*(2006.01)i

According to International Patent Classification (IPC) or to both national classification and IPC

B.   FIELDS SEARCHED

Minimum documentation searched (classification system followed by classification symbols)
F21S2/00, F21V8/00, G02B6/00, G09F13/00-13/46

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | JP 2009-146787 A  (S.K.G. Co., Ltd.), 02 July 2009 (02.07.2009), paragraphs [0013] to [0024]; fig. 10, 12 & WO 2009/078368 A1 | 1-19 |
| Y | JP 2005-163274 A  (Sekisui Jushi Corp.), 23 June 2005 (23.06.2005), paragraph [0024]; fig. 2 (Family: none) | 1-19 |
| Y | JP 2008-198481 A  (Omron Corp.), 28 August 2008 (28.08.2008), paragraph [0033]; fig. 13 (Family: none) | 2 |

☒   Further documents are listed in the continuation of Box C.          ☐   See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 June, 2010 (09.06.10) | 22 June, 2010 (22.06.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/003512

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-109135 A  (Kimoto Co., Ltd., Shimura Kaken Kogyo Kabushiki Kaisha), 23 April 1999 (23.04.1999), paragraphs [0015], [0023]; fig. 1 (Family: none) | 9 |
| Y | JP 2007-42562 A  (Tamotsu AZUMA), 15 February 2007 (15.02.2007), paragraphs [0017] to [0044]; fig. 1, 2, 8, 9, 11 (Family: none) | 13-19 |

Form PCT/ISA/210 (continuation of second sheet) (July 2009)

**EP 2 461 083 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008305713 A
- JP 2006511128 A